# EUROPEAN PATENT SPECIFICATION

(11) **EP 4 528 980 B1**
(45) Date of publication and mention of the grant of the patent: **02.12.2026**
(21) Application number: 23902197.5
(22) Date of filing: 08.09.2023
(51) Int. Cl.: H02J 50/90, H02J 7/80, H02J 50/10

(54) **DEVICE MOVING METHOD AND TRANSMITTING-END DEVICE**
VORRICHTUNGSBEWEGUNGSVERFAHREN UND SENDESEITIGE VORRICHTUNG
PROCÉDÉ DE DÉPLACEMENT DE DISPOSITIF ET DISPOSITIF D'EXTRÉMITÉ D'ÉMISSION

(30) Priority: 14.12.2022 CN 202211608509
(43) Date of publication of application: 26.03.2025
(73) Proprietor: Honor Device Co., Ltd., Shenzhen, Guangdong 518040 (CN)
(72) Inventor: ZHANG, Anle, Shenzhen, Guangdong 518040 (CN); JIANG, Senlong, Shenzhen, Guangdong 518040 (CN)
(74) Representative: Gill Jennings & Every LLP
(86) International application number: PCT/CN2023/117715
(87) International publication number: WO 2024/124991

(56) References cited:
- CN-A- 112 467 884
- CN-A- 113 783 308
- CN-A- 113 783 308
- CN-A- 114 039 390
- CN-A- 115 441 524
- CN-U- 213 402 574
- CN-U- 219 592 172
- JP-A- 2011 004 474
- KR-A- 20210 094 968

## Description

### TECHNICAL FIELD

The disclosure relates to the field of wireless charging technologies, and particularly relates to a device moving method and a transmitting end device.

### BACKGROUND

A wireless charging technology (wireless charging technology, WCT) uses a conductive medium such as an electric field, a magnetic field, a microwave or laser light to implement wireless transmission of electric energy. With advantages of no wire limitation and no plugging, the wireless charging technology is increasingly widely applied to electronic devices currently.

At present, a transmitting end device is used for wireless charging of an increasing number of electronic devices. For example, the electronic device may charge a mobile phone, a wearable device, etc. This type of electronic device or may be referred to as a receiving end device. Both the transmitting end device and the receiving end device include coils to implement wireless charging. The coil included in the receiving end device may be referred to as a receiving end coil, and the coil included in the transmitting end device may be referred to as a transmitting end coil. The wireless transmission of electric energy may be implemented through electromagnetic coupling between the transmitting end coil and the receiving end coil. However, during wireless charging, centers of the transmitting end coil and the receiving end coil are required to coincide (even within a specific error range). Only in this way, alignment can be desirable, and charging efficiency can be high. If a deviation between the centers of the transmitting end coil and the receiving end coil is excessive (this situation may be referred to as a "deviation"), wireless charging may not be implemented or charging efficiency is low. In a case that the centers coincide, a connection line between the centers of the two coils is perpendicular or approximately perpendicular to any coil plane.

At present, positions of receiving end coils of different receiving end devices are different. In order to better implement wireless charging of the receiving end device, the transmitting end coil can be automatically aligned with the receiving end coil. That is, the centers of the transmitting end coil and the receiving end coil are controlled to coincide such that charging efficiency can be improved.

CN 114039390 A discloses a wireless charging stand with movable arm and control module. CN 113783308 A discloses movable transmitter coil and movable cradle in orthogonal directions. JP 2011-4474 A discloses charging stand with position-detection coils and movable transmitter coil.

### SUMMARY

The disclosure provides a device moving method and a transmitting end device. By moving a receiving end device in a first direction and moving a transmitting end coil in a second direction, centers of the transmitting end coil and a receiving end coil coincide. In this way, efficiency of charging the receiving end device by the transmitting end device can be improved, heat generation of the receiving end device can be reduced, and time of high-power wireless charging can be prolonged.

According to a first aspect of the invention, the disclosure provides a device moving method. The method is applicable to a wireless charging system including a transmitting end device and a receiving end device. The transmitting end device includes a transmitting end coil. The receiving end device includes a receiving end coil. When the wireless charging system operates, the method includes: the transmitting end device moves the receiving end device in a first direction, and a first parameter is determined at a first frequency when the receiving end device is moved; the receiving end device is moved to a first position; where the first position is a position of the receiving end device in a case of a maximum first parameter when the receiving end device is moved; the transmitting end device moves the transmitting end coil in a second direction perpendicular to the first direction, and the first parameter is determined at a second frequency when the transmitting end coil is moved; and the transmitting end coil is moved to a second position; where the second position is a position of the transmitting end coil in a case of the maximum first parameter when the transmitting end coil is moved. The method further comprises stopping, by the transmitting end device in a case that a first condition is satisfied when the transmitting end device moves the receiving end device in the first direction, moving the receiving end device in the first direction, and moving the receiving end device in an opposite direction of the first direction to the first position; wherein the first condition comprises: when the transmitting end device moves the receiving end device, a measured first parameter continuously increases when the receiving end device is moved in the first direction to the first position, and continuously decreases R times when the receiving end device continues being moved in the first direction after passing the first position; wherein R is an integer greater than or equal to 1; and stopping, by the transmitting end device in a case that a second condition is satisfied when the transmitting end device moves the transmitting end coil in the second direction, moving the transmitting end coil in the second direction, and moving the transmitting end coil in an opposite direction of the second direction to the second position; wherein the second condition comprises: when the transmitting end device moves the transmitting end coil, a measured first parameter continuously increases when the transmitting end coil is moved in the second direction to the second position, and continuously decreases M times when the transmitting end coil continues being moved in the second direction after passing the second position; wherein M is an integer greater than or equal to 1, wherein the transmitting end device further comprises a first clamp arm and a second clamp arm; the first frequency means that the transmitting end device determines the first parameter once every first time, and the first time is time during which the transmitting end device moves the first clamp arm and second clamp arm E times; the moving the receiving end device in a first direction specifically comprises: pushing, by the transmitting end device by means of the first clamp arm, the receiving end device to move in the first direction; and controlling, by the transmitting end device in a case that a first condition is satisfied when the receiving end device is moved, the receiving end device to move in an opposite direction of the first direction to the first position specifically comprises: causing, by the transmitting end device in a case that the first condition is satisfied when the transmitting end device moves the receiving end device based on the first clamp arm, the two clamp arms to clamp the receiving end device; wherein the two clamp arms comprise the first clamp arm and the second clamp arm; and pushing, by the transmitting end device based on the second clamp arm, the receiving end device to move in the opposite direction of the first direction E × R times to the first position, wherein the transmitting end device further comprises a first motor corresponding to the first clamp arm and a second motor corresponding to the second clamp arm, the first clamp arm moves once every time the first motor rotates, and the second clamp arm moves once every time the second motor rotates; and in a case that the first condition is satisfied when the transmitting end device moves the receiving end device based on the first clamp arm, the method further comprises: determining, by the transmitting end device in a case that the transmitting end device determines that the first and second motors stall, that the two clamp arms clamp the receiving end device; and controlling, in a case that the transmitting end device determines that the motors corresponding to the two clamp arms do not stall, a motor having a larger current of the first and second motors corresponding to the two clamp arms to stop rotating, and a motor having a smaller current to continue rotating, causing the clamp arm corresponding to the motor having the smaller current to make contact with the receiving end device, and causing the two clamp arms to clamp the receiving end device.

In the above embodiment, the first direction may be a horizontal direction, and the second direction may be a vertical direction. Alternatively, the first direction may be a vertical direction, and the second direction may be a horizontal direction. In cases that the receiving end device is moved in the horizontal direction and the transmitting end coil is moved in the vertical direction, an example of the first position may be target position 1 in the following embodiments, and a first example of the second position may be target position 2 in the following embodiments. The first parameter may be a Q value involved in the following embodiments. The shorter a distance between the two coils, the better coincidence, and the greater the first parameter. The longer the distance between the two coils, the less the first parameter.

The transmitting end device may move the receiving end device and the transmitting end coil such that alignment can be implemented, the first parameter can be measured, and an alignment situation of the transmitting end coil and the receiving end coil can be determined. In a case of the maximum first parameter, the alignment is stopped such that centers of the transmitting end coil and the receiving end coil can coincide. In this way, efficiency of charging the receiving end device by the transmitting end device can be improved, heat generation of the receiving end device can be reduced, and time of high-power wireless charging can be prolonged.

In combination with the first aspect, in some embodiments, the method further includes: in a case that a first condition is satisfied when the transmitting end device moves the receiving end device in the first direction, the transmitting end device stops moving the receiving end device in the first direction, and moves the receiving end device in an opposite direction of the first direction to the first position; where the first condition includes: when the transmitting end device moves the receiving end device, a measured first parameter continuously increases when the receiving end device is moved in the first direction to the first position, and continuously decreases R times when the receiving end device continues being moved in the first direction after passing the first position; where R is an integer greater than or equal to 1; and in a case that a second condition is satisfied when the transmitting end device moves the transmitting end coil in the second direction, the transmitting end device stops moving the transmitting end coil in the second direction, and moves the transmitting end coil in an opposite direction of the second direction to the second position; where the second condition includes: when the transmitting end device moves the transmitting end coil, a measured first parameter continuously increases when the transmitting end coil is moved in the second direction to the second position, and continuously decreases M times when the transmitting end coil continues being moved in the second direction after passing the second position; where M is an integer greater than or equal to 1.

In the above embodiment, when the receiving end device is moved, in a case that the first parameter is measured to continuously increase and then continuously decrease R times, a position at which the first parameter changes is the first position. The receiving end device is controlled to move in an opposite direction of the first position such that alignment in the first direction can be implemented. When the transmitting end coil is moved, in a case that the first parameter is measured to continuously increase and then continuously decrease M times, a position at which the first parameter changes is the second position. The receiving end device is controlled to move in an opposite direction of the second position such that alignment in the second direction can be implemented. This process is implemented by measuring the first parameter when the receiving end device or the transmitting end coil is moved, and is simple to implement.

In combination with the first aspect, in some embodiments, the method further includes: the transmitting end device charges the receiving end device with first power before the transmitting end device moves the receiving end device in a first direction; and the transmitting end device charges the receiving end device with second power after the transmitting end device moves the transmitting end coil to a second position. The second power is greater than the first power.

In the above embodiment, an illustrative description of the first power may be power A in the following embodiments, and an illustrative description of the second power may be power B in the following embodiments. Before the alignment, since a distance between the transmitting end coil and the receiving end coil is long, low power (the first power) is used for wireless charging before the alignment. Thus, the receiving end device can be charged, but heat generation of the receiving end device due to an alignment deviation cannot be caused. After the alignment is completed, high power can be used for wireless charging such that efficiency of charging the receiving end device by the transmitting end device can be improved.

In combination with the first aspect, in some embodiments, before the transmitting end device moves the receiving end device in a first direction, the method further includes: in a case that the measured first parameter continuously decreases R times when the transmitting end device moves the receiving end device in the opposite direction of the first direction, it is determined that the transmitting end device moves the receiving end device in the first direction.

In the above embodiment, when the receiving end device is moved, before being measured to continuously increase, the first parameter may be measured to continuously decrease R times. In this case, the receiving end device can be moved in an opposite direction such that the transmitting end device can determine the first position.

The transmitting end device further includes a first clamp arm and a second clamp arm. The first frequency means that the transmitting end device determines the first parameter once every first time, and the first time is time during which the transmitting end device moves the clamp arm E times. The step that the receiving end device is moved in a first direction specifically includes: the transmitting end device pushes, by means of the first clamp arm, the receiving end device to move in the first direction. The step that in a case that a first condition is satisfied when the receiving end device is moved, the transmitting end device controls the receiving end device to move in an opposite direction of the first direction to the first position specifically includes: in a case that the first condition is satisfied when the transmitting end device moves the receiving end device based on the first clamp arm, the transmitting end device causes the two clamp arms to clamp the receiving end device; where the two clamp arms include the first clamp arm and the second clamp arm; and the transmitting end device pushes, based on the second clamp arm, the receiving end device to move in the opposite direction of the first direction E × R times to the first position.

In the above embodiment, an illustrative description of the first frequency may be preset frequency 1 involved in the embodiments. In a case that the first parameter is measured to continuously increase and then continuously decrease R times, the position at which the first parameter changes is the first position. In this case, since the first frequency means that the first parameter is measured once when the clamp arm is moved E times, the receiving end device can be moved in the opposite direction of the first direction F × R times to return to the first position. The symbol "×" means "multiplied by". This process is simple, depends on a relationship between the first frequency and R, and does not involve complex computation.

In combination with the first aspect, in some embodiments, before the receiving end device is moved in a first direction, the method further includes: the transmitting end device moves the two clamp arms to the transmitting end coil at a first rate, and the first parameter is determined at the first frequency; and in a case that the transmitting end device determines that the first parameter is continuously the same T times when the two clamp arms are moved, the two clamp arms are moved to the transmitting end coil at a second rate, and the first parameter is determined at a third frequency. A third rate is less than the first rate. The second frequency is less than the third frequency. Moreover, T is an integer greater than or equal to 1.

In the above embodiment, an illustrative description of the second frequency may be preset frequency 2 involved in the embodiments. An illustrative description of the first rate may be rate A involved in the embodiments, and an illustrative description of the second rate may be rate B involved in the embodiments. Herein, in a case that initial distances between the two clamp arms and the receiving end device are long, a movement of the two clamp arms cannot cause a movement of the receiving end device. The movement of the clamp arms can be accelerated such that the clamp arms can rapidly make contact with the receiving end device. Thus, the clamp arms can make contact with the receiving end device faster such that time of alignment in the first direction can be reduced. Moreover, when the movement of the clamp arms is accelerated, frequency of measuring the first parameter can be reduced, and computing resources can be saved.

In combination with the first aspect, in some embodiments, before the receiving end device is moved in a first direction, the method further includes: in cases that the transmitting end device determines that at least one of the two clamp arms makes contact with the receiving end device, and the measured first parameter is continuously the same U times, it is determined that the receiving end device is moved in the first direction; where U is an integer greater than or equal to 1.

The transmitting end device further includes a motor corresponding to the first clamp arm and a motor corresponding to the second clamp arm. The first clamp arm moves once every time the motor corresponding to the first clamp arm rotates. The second clamp arm moves once every time the motor corresponding to the second clamp arm rotates. In a case that the first condition is satisfied when the transmitting end device moves the receiving end device based on the first clamp arm, the method further includes: in a case that the transmitting end device determines that the motors corresponding to the two clamp arms stall, the transmitting end device determines that the two clamp arms clamp the receiving end device; and in a case that the transmitting end device determines that the motors corresponding to the two clamp arms do not stall, a motor having a larger current of the motors corresponding to the two clamp arms is controlled to stop rotating, and a motor having a smaller current is controlled to continue rotating, the clamp arm corresponding to the motor having the smaller current is caused to make contact with the receiving end device, and the two clamp arms are caused to clamp the receiving end device.

The transmitting end device further includes a motor corresponding to the first clamp arm and a motor corresponding to the second clamp arm. The first clamp arm moves once every time the motor corresponding to the first clamp arm rotates. The second clamp arm moves once every time the motor corresponding to the second clamp arm rotates. In a case that the first condition is satisfied when the transmitting end device moves the receiving end device based on the first clamp arm, the method further includes: in a case that the transmitting end device determines that the motors corresponding to the two clamp arms stall, the transmitting end device determines that the two clamp arms clamp the receiving end device; and in a case that the transmitting end device determines that the motors corresponding to the two clamp arms do not stall, a motor having a larger current of the motors corresponding to the two clamp arms is controlled to stop rotating, and a motor having a smaller current is controlled to continue rotating, the clamp arm corresponding to the motor having the smaller current is caused to make contact with the receiving end device, and the two clamp arms are caused to clamp the receiving end device.

In the above embodiment, the clamp arms are controlled by the motors to move. The motors are low in manufacture cost and easy to control. Thus, the method can be easier to implement, and manufacture cost of the transmitting end device is not likely to be increased. In some possible cases, the motors are stepping motors. A working principle of the motors includes: a pulse square wave is inputted to the motors, and includes a low level or a high level in a period. The motors can rotate at the high level and cannot rotate at the low level.

The step that the transmitting end device pushes, based on the second clamp arm, the receiving end device to move in the opposite direction of the first direction E × R times to the first position specifically includes: in a case that the two clamp arms clamp the receiving end device, a motor having a larger initial current of the motors corresponding to the two clamp arms is rotated in an opposite direction E × R times, the transmitting end device rotates a motor having a smaller initial current of the motors corresponding to the two clamp arms E × R times, and a clamp arm corresponding to the motor having the smaller initial current is caused to push the receiving end device to move in the opposite direction of the first direction E × R times to the first position. The initial current of the motor includes a current of the motor acquired in a case that the first condition is satisfied when the receiving end device is moved. The clamp arm corresponding to the motor having the smaller initial current is the second clamp arm. The clamp arm corresponding to the motor having the larger initial current is the first clamp arm.

In the above embodiment, by rotating the motors in the opposite direction E × R times, the receiving end device can return to the first position. The control method is simple, completed through hardware control, and high in precision.

In combination with the first aspect, in some embodiments, before the transmitting end coil is moved in a second direction, the method further includes: in a case that the measured first parameter continuously decreases M times when the transmitting end device moves the transmitting end coil in the opposite direction of the second direction, it is determined that the transmitting end device moves the transmitting end coil in the second direction.

In the above embodiment, when the transmitting end coil is moved, before being measured to continuously increase, the first parameter may also be measured to continuously decrease M times. In this case, the transmitting end coil may be moved in an opposite direction such that the transmitting end device can determine the second position.

The transmitting end device further includes a motor corresponding to the transmitting end coil. The transmitting end coil is moved once every time the motor corresponding to the transmitting end coil rotates. The second frequency means that the first parameter is determined once every second time. The second time is time during which the transmitting end device moves the transmitting end coil G times. The step that the transmitting end device controls the transmitting end coil to move in an opposite direction of the second direction to the second position specifically includes: the transmitting end device rotates the motor corresponding to the transmitting end coil in an opposite direction G × M times, and the transmitting end coil is controlled to move in the opposite direction of the second direction to the second position.

In the above embodiment, the transmitting end device is controlled by the motors to move. The motors are low in manufacture cost and easy to control. Thus, the method can be easier to implement, and manufacture cost of the transmitting end device is not likely to be increased. By rotating the motors in the opposite direction G × R times, the transmitting end coil can return to the second position. The control method is simple, completed through hardware control, and high in precision.

In combination with the first aspect, in some embodiments, the first parameter is quality factor Q, and is used to measure charging efficiency of the transmitting end device. The higher the charging efficiency, the greater the first parameter.

According to a second aspect of the invention, an embodiment of the disclosure provides a transmitting end device. The transmitting end device includes two clamp arms and a transmitting end coil. The two clamp arms are telescopically movable in a first direction. In a case that a first condition is satisfied when the transmitting end device moves the receiving end device in the first direction by means of the two clamp arms, the transmitting end device stops moving the receiving end device in the first direction, and moves the receiving end device in an opposite direction of the first direction to the first position. The first condition includes: when the transmitting end device moves the receiving end device, a measured first parameter continuously increases when the receiving end device is moved in the first direction to the first position, and continuously decreases R times when the receiving end device continues being moved in the first direction after passing the first position; where R is an integer greater than or equal to 1. The transmitting end coil is movable in a second direction perpendicular to the first direction. In a case that a second condition is satisfied when the transmitting end device moves the transmitting end coil in the second direction, the transmitting end device stops moving the transmitting end coil in the second direction, and moves the transmitting end coil in an opposite direction of the second direction to the second position. The second condition includes: when the transmitting end device moves the transmitting end coil, a measured first parameter continuously increases when the transmitting end coil is moved in the second direction to the second position, and continuously decreases M times when the transmitting end coil continues being moved in the second direction after passing the second position; where M is an integer greater than or equal to 1. The transmitting end device is configured, when the wireless charging system operates, to move the receiving end device in the first direction and determine the first parameter at a first frequency when the receiving end device is moved, and to move the receiving end device to the first position, wherein the first position is a position of the receiving end device in a case of a maximum first parameter when the receiving end device is moved; and to move the transmitting end coil in the second direction and determine the first parameter at a second frequency when the transmitting end coil is moved, and to move the transmitting end coil to the second position, wherein the second position is a position of the transmitting end coil in a case of the maximum first parameter when the transmitting end coil is moved; wherein the two clamp arms comprise a first clamp arm and a second clamp arm; the first frequency means that the transmitting end device determines the first parameter once every first time, and the first time is time during which the transmitting end device moves the first clamp arm and second clamp arm E times; moving the receiving end device in the first direction comprises pushing, by the transmitting end device by means of the first clamp arm, the receiving end device to move in the first direction; and moving the receiving end device in the opposite direction of the first direction to the first position comprises, in a case that the first condition is satisfied, causing, by the transmitting end device, the two clamp arms to clamp the receiving end device, and pushing, by the transmitting end device based on the second clamp arm, the receiving end device to move in the opposite direction of the first direction E × R times to the first position; wherein the transmitting end device further comprises a first motor corresponding to the first clamp arm and a second motor corresponding to the second clamp arm, the first clamp arm moves once every time the first motor rotates, and the second clamp arm moves once every time the second motor rotates; and in a case that the first condition is satisfied when the transmitting end device moves the receiving end device based on the first clamp arm, the transmitting end device is configured to determine, in a case that the motors corresponding to the two clamp arms stall, that the two clamp arms clamp the receiving end device; and to control, in a case that the motors corresponding to the two clamp arms do not stall, a motor having a larger current of the motors corresponding to the two clamp arms to stop rotating, and a motor having a smaller current to continue rotating, causing the clamp arm corresponding to the motor having the smaller current to make contact with the receiving end device, and causing the two clamp arms to clamp the receiving end device

In the above embodiment, the transmitting end device may move the receiving end device and the transmitting end coil such that alignment can be implemented, the first parameter can be measured, and an alignment situation of the transmitting end coil and the receiving end coil can be determined. In a case of the maximum first parameter, the alignment is stopped such that centers of the transmitting end coil and the receiving end coil can coincide. In this way, efficiency of charging the receiving end device by the transmitting end device can be improved, heat generation of the receiving end device can be reduced, and time of high-power wireless charging can be prolonged. When the receiving end device is moved, in a case that the first parameter is measured to continuously increase and then continuously decrease R times, a position at which the first parameter changes is the first position. The receiving end device is controlled to move in an opposite direction of the first position such that alignment in the first direction can be implemented. When the transmitting end coil is moved, in a case that the first parameter is measured to continuously increase and then continuously decrease M times, a position at which the first parameter changes is the second position. The receiving end device is controlled to move in an opposite direction of the second position such that alignment in the second direction can be implemented. This process is implemented by measuring the first parameter when the receiving end device or the transmitting end coil is moved, and is simple to implement.

According to a third aspect, an embodiment of the disclosure provides a transmitting end device. The transmitting end device includes: one or more processors and a memory. The memory is coupled to the one or more processors. The memory is configured to store computer program code. The computer program code includes computer instructions. The one or more processors call the computer instructions to cause the transmitting end device to perform the method described in the first aspect or any implementation of the first aspect.

In the above embodiment, the transmitting end device may move the receiving end device and the transmitting end coil such that alignment can be implemented, the first parameter can be measured, and an alignment situation of the transmitting end coil and the receiving end coil can be determined. In a case of the maximum first parameter, the alignment is stopped such that centers of the transmitting end coil and the receiving end coil can coincide. In this way, efficiency of charging the receiving end device by the transmitting end device can be improved, heat generation of the receiving end device can be reduced, and time of high-power wireless charging can be prolonged.

According to a fourth aspect of the invention, an embodiment of the disclosure provides a computer storage medium. The storage medium stores a computer program. The computer program includes executable instructions. When executed by a processor, the executable instructions cause the processor to perform the method described in the first aspect or any implementation of the first aspect.

In the above embodiment, the transmitting end device may move the receiving end device and the transmitting end coil such that alignment can be implemented, the first parameter can be measured, and an alignment situation of the transmitting end coil and the receiving end coil can be determined. In a case of the maximum first parameter, the alignment is stopped such that centers of the transmitting end coil and the receiving end coil can coincide. In this way, efficiency of charging the receiving end device by the transmitting end device can be improved, heat generation of the receiving end device can be reduced, and time of high-power wireless charging can be prolonged.

According to a fifth aspect, an embodiment of the disclosure provides a chip system. The chip system is applied to a terminal. The chip system includes one or more processors. The processors are configured to call computer instructions to cause the terminal to perform a method for processing a sound image orientation described in the first aspect or any implementation of the first aspect.

According to a sixth aspect, an embodiment of the disclosure provides a computer program product including instructions. When run on a terminal, the computer program product causes the terminal to perform the method described in the first aspect or any implementation of the first aspect.

For beneficial effects of the second aspect to the sixth aspect, reference can be made to the above descriptions of the first aspect, which will not be repeated herein.

### BRIEF DESCRIPTION OF DRAWINGS

FIG. 1 shows a schematic diagram of a transmitting end device according to a solution;
FIG. 2 shows a schematic diagram of a transmitting end device according to an embodiment of the disclosure;
FIG. 3 shows a schematic diagram showing that a receiving end device is moved;
FIG. 4 shows a schematic diagram showing that a transmitting end coil is moved;
FIG. 5 shows a flow diagram of an example in which wireless charging is performed between a transmitting end device and a receiving end device;
FIG. 6 shows a diagram of an example of a reference coordinate system and position information;
FIG. 7 shows initial state diagrams of a plurality of examples in which a receiving end device is placed on a transmitting end device;
FIG. 8 shows a flow diagram of an example in which a transmitting end device implements horizontal alignment according to preset rule 1;
FIG. 9A and FIG. 9B show schematic diagrams showing that horizontal alignment is completed in state A;
FIG. 10A and FIG. 10B show schematic diagrams showing that horizontal alignment is completed in state B;
FIG. 11A and FIG. 11B show schematic diagrams showing that horizontal alignment is completed in state C;
FIG. 12 shows a flow diagram of an example in which a transmitting end device implements vertical alignment according to preset rule 2;
FIG. 13 shows a schematic diagram showing that a transmitting end coil is moved;
FIG. 14 is a schematic structural diagram of a transmitting end device according to an embodiment of the disclosure; and
FIG. 15 is a schematic diagram of a receiving end device according to an embodiment of the disclosure.

### DESCRIPTION OF EMBODIMENTS

Terms used in the following embodiments of the disclosure are only intended to describe particular embodiments, and are not intended to limit the disclosure. As used in the description and claims of the disclosure, a singular expression form, "one", "a", "an", "the", "the above", "mentioned above", "this", "these" and "such a", is intended to further include a plural expression form, unless clearly indicated to the contrary in the context. It should be further understood that the term "and/or" used in the disclosure indicates and includes any or all possible combinations of one or more listed items.

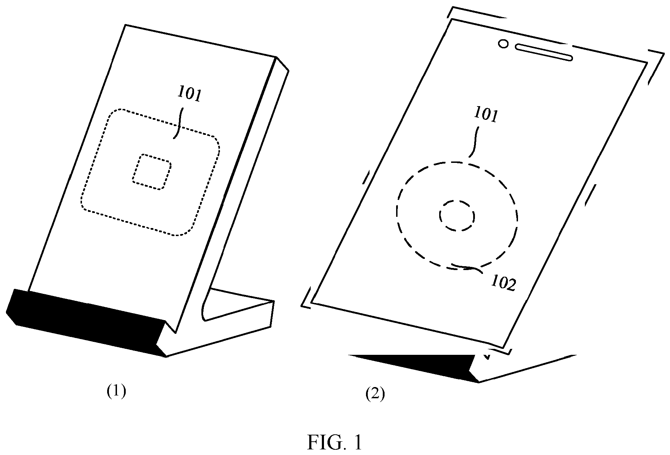

**FIG. 1** **shows a schematic diagram of a transmitting end device according to a solution.**

In this solution, as shown in (1) of FIG. 1, a position of a charging coil (such as a coil 101) of a transmitting end device is fixed, and the transmitting end device cannot change a position of a receiving end device such that automatic alignment cannot be implemented. Positions of charging coils (receiving end coils) of different receiving end devices are different, such that it is difficult to adapt to the transmitting end device. For a schematic diagram showing that a charging coil of a receiving end device is not aligned with a charging coil of a transmitting end device, reference can be made to (2) of FIG. 1. Centers of the charging coil (such as a coil 102) of the receiving end device and the charging coil (such as a coil 101) of the transmitting end device do not coincide, such that alignment is not implemented.

For example, as a position and size of a camera of the receiving end device change, the position of the receiving end coil may be different. When the receiving end device is placed on the transmitting end device, since the transmitting end device cannot perform automatic alignment, it is difficult to ensure that the receiving end coil is aligned with the coil 101 during charging. That is, during charging, there is a possibility that centers of the receiving end coil and the coil 101 do not coincide, resulting in low charging efficiency. A reason for low charging efficiency is as follows: in a case that the transmitting end coil is not aligned with (deviates from) the receiving end coil (such as the coil 101), the receiving end coil cannot efficiently receive energy outputted by the transmitting end coil and cannot perform charging, such that charging efficiency is low. In a case of deviation, other metal objects (such as a metal holder) carried by the receiving end device may also generate heat due to an eddy current effect. Due to temperature control protection, time of high-power wireless charging will be reduced. The deviation further causes a problem of weakening a capability of detecting a foreign object. In order to prevent a charging alarm from being triggered by mistake in a case of the deviation, a threshold for detecting a foreign object will be in a wider range, and a capability of detecting a foreign object will be weakened. The foreign object may be understood as another metal object placed on the transmitting end device other than the receiving end device.

Embodiments of the disclosure provide a transmitting end device and a device moving method. In this method, the transmitting end device can control a receiving end device to horizontally move such that horizontal alignment can be implemented, and control a transmitting end coil (a charging coil of the transmitting end device) to vertically move such that vertical alignment can be implemented. In a case that the horizontal alignment and the vertical alignment are completed, it indicates that the transmitting end coil is aligned with a receiving end coil (a charging coil of the receiving end device), such that centers of the transmitting end coil and the receiving end coil coincide. A case that the centers coincide involved herein includes a case that a connection line between the centers of the two coils is perpendicular or approximately perpendicular to any coil.

In some scenarios, the transmitting end device involved in embodiments of the disclosure may be referred to as a wireless charging transmitting end device. The receiving end device involved in embodiments of the disclosure may be referred to as a wireless charging receiving end device.

It should be understood that causing the centers of the two coils (the transmitting end coil and the receiving end coil) to coincide may also be described as making a distance of a connection line between the centers of the two coils shortest, that is, making the two coils closest to each other. Making the two coils closest to each other herein includes making the two coils closest to each other in a horizontal direction, and also includes making the two coils closest to each other in a vertical direction.

In some possible cases, after the receiving end device is placed on the transmitting end device, the transmitting end device may first control the receiving end device to horizontally move in a device support base, and stop moving the receiving end device when determining that the receiving end coil is closest to the transmitting end coil in the horizontal direction. In this case, horizontal alignment is completed, and a vertical central axis of the receiving end coil and a vertical central axis of the transmitting end coil coincide. Then, the transmitting end device may control the transmitting end coil to move in the vertical direction, and stop moving the transmitting end coil when determining that the transmitting end coil is closest to the receiving end coil in the vertical direction. In this case, the centers of the two coils coincide, and alignment is completed.

In some other possible cases, after the receiving end device is placed on the transmitting end device, the transmitting end device may first control the transmitting end coil to move in the vertical direction, and stop moving the transmitting end coil when determining that the transmitting end coil is closest to the receiving end coil in the vertical direction. In this case, vertical alignment is completed, and a horizontal central axis of the receiving end coil and a horizontal central axis of the transmitting end coil coincide. Then, the transmitting end device may first control the receiving end device to horizontally move in a device support base, and stop moving the receiving end device when determining that the receiving end coil is closest to the transmitting end coil in the horizontal direction. In this case, vertical alignment is completed, the centers of the two coils coincide, and alignment is completed.

It should be understood that the case that two central axes coincide mentioned above includes a case that projections of the two central axes on the receiving end device coincide. In this case, a distance between the two central axes is shortest. The two central axes include the horizontal central axis of the receiving end coil and the horizontal central axis of the transmitting end coil, or the vertical central axis of the receiving end coil and the vertical central axis of the transmitting end coil.

It should be understood that a horizontal case may include horizontal central axes being parallel, and a vertical case may include vertical central axes being parallel.

In the above, a method through which the transmitting end device determines that the receiving end coil is closest to the transmitting end coil in the horizontal direction includes: when the receiving end device is horizontally moved, the transmitting end device measures a Q value at preset frequency 1. The position of the transmitting end coil is unchanged, and the position of the receiving end coil changes as the receiving end device is moved. When determining a measured maximum Q value (a maximum value in the horizontal direction), the receiving end device is stopped from being moved, such that horizontal alignment is completed.

A method through which the transmitting end device determines that the receiving end coil is closest to the transmitting end coil in the vertical direction includes: when the transmitting end coil is vertically moved, the transmitting end device measures a Q value at preset frequency 3. A position of the receiving end coil is unchanged, and a position of the transmitting end coil is changed. when determining a measured maximum Q value (a maximum value in a vertical direction), the transmitting end coil is stopped from being moved such that vertical alignment can be completed.

The Q value is a quality factor (quality factor) of the coil. The greater the Q value, the closer the centers of the two coils, and the higher the charging efficiency. The less the Q value, the farther the centers of the two coils, and the lower the charging efficiency.

The Q value has a monotonic relationship with relative positions of the two coils (the transmitting end coil and the receiving end coil). When the two coils move close to each other, the Q value increases. When the two coils move away from each other, the Q value decreases. The Q value may be represented as a ratio of energy (such as electromagnetic energy) used by the coil for charging to energy consumed by the coil. The consumed energy may include magnetic loss, line loss, etc. The consumed energy cannot be received by the receiving end coil and cannot be used for charging. For computation of the Q value, reference can be made to the following formula. $Q = \frac{{w}_{tx} \times {L}_{tx}}{{R}_{tx}}$

In the formula, *Lₜₓ* is an inductance value of the transmitting end coil, *Rₜₓ* is alternating current impedance of the transmitting end coil, and *wₜₓ* is an angular resonance frequency of a resonant network of the transmitting end device.

Based on the above description, it can be understood that the transmitting end device may first horizontally move the receiving end device, and then vertically move the transmitting end coil such that alignment can be completed. Alternatively, the transmitting end device may first vertically move the transmitting end coil, and then horizontally move the receiving end device such that the alignment can be completed. A sequence of moving the receiving end device and the transmitting end coil is not limited in embodiments of the disclosure.

In order to implement fast alignment, the receiving end device and the transmitting end coil may not be moved at the same time, because whether a change in the Q value is caused by moving the receiving end device or moving the transmitting end coil cannot be determined.

**An illustrative introduction to a transmitting end device involved in embodiments of the disclosure will be given below.**

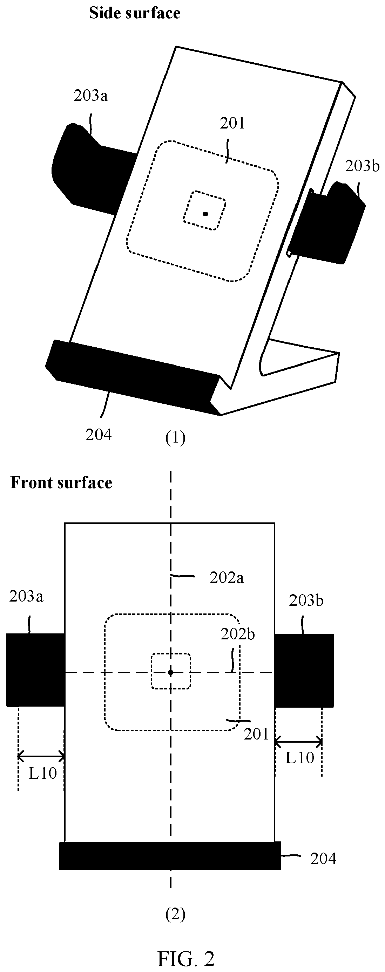

**FIG. 2** **shows a schematic diagram of a transmitting end device according to an embodiment of the disclosure.**

As shown in (1) of FIG. 2, a side surface of a transmitting end device is shown. As shown in (2) of FIG. 2, a front surface of a transmitting end device is shown. The transmitting end device will be introduced below based on (2) of FIG. 2.

As shown in (1) of FIG. 2 and (2) of FIG. 2, the transmitting end device may include a charging coil (that is, a transmitting end coil), a device support base, and two alignment clamp arms. For example, a coil 201 may be considered as illustrative display of the transmitting end coil. A base 204 may be considered as illustrative display of the device support base. A clamp arm 203a and a clamp arm 203b may be considered as illustrative display of the two alignment clamp arms. In some possible cases, maximum visual lengths of the two alignment clamp arms are the same, and for example, may be L10 as shown. The maximum visual lengths of the two clamp arms may be 0.5 cm - 2 cm, for example, 1 cm, and or may be another value during actual application, which is not limited in embodiments of the disclosure.

A vertical central axis of the transmitting end coil is a line which passes a center of the transmitting end coil and is perpendicular to the device support base. For example, a central axis 202a may be considered as illustrative display of the vertical central axis. A horizontal central axis of the transmitting end coil is a line which passes a center of the transmitting end coil and is parallel to the device support base. For example, a central axis 202b may be considered as illustrative display of the horizontal central axis of the transmitting end coil.

For ease of description, the alignment clamp arms may be referred to as clamp arms hereinafter.

The device support base may be configured to support the receiving end device such that the receiving end device can be placed on the transmitting end device for charging.

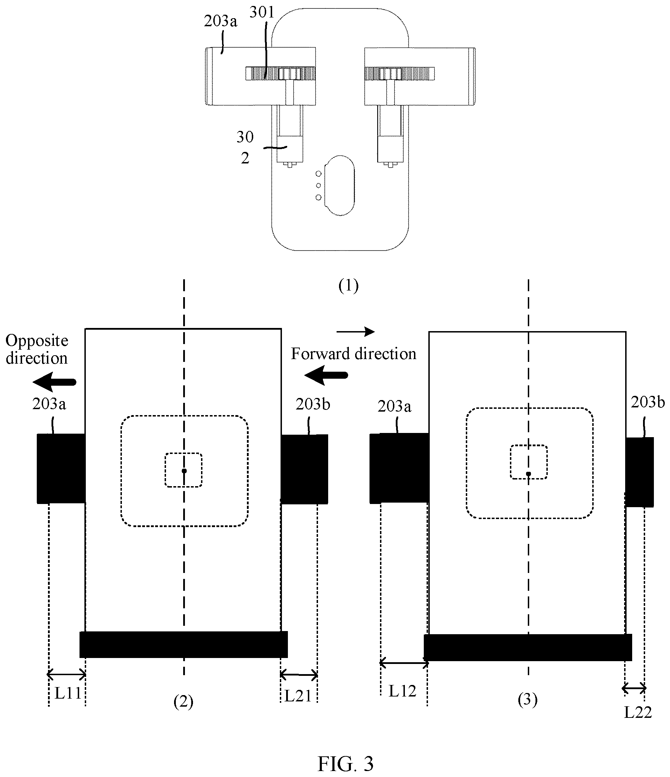

The two alignment clamp arms may be configured to horizontally move the receiving end device such that a position of the receiving end device on the device support base can be changed, and relative positions of the receiving end coil and the transmitting end coil can be changed. For an illustrative introduction showing that the receiving end device is moved, reference can be made to the following descriptions of FIG. 3, which will not be repeated herein temporarily.

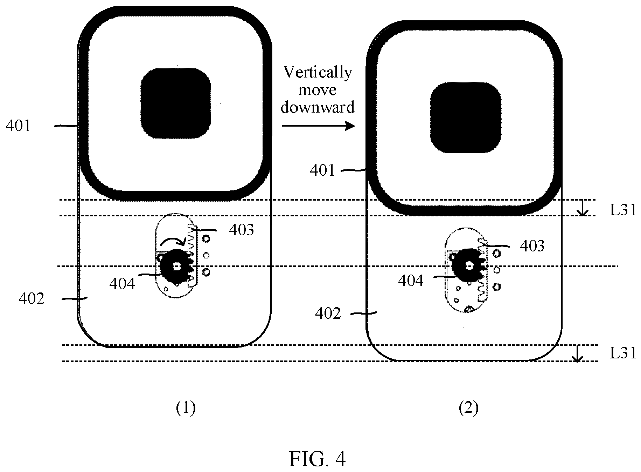

The transmitting end coil can be configured to transmit energy (such as electromagnetic energy) to a coil (that is, the receiving end coil) of the receiving end device such that the receiving end device can receive the electromagnetic energy by means of the receiving end coil, rectify and filter the electromagnetic energy, and then input the electromagnetic energy into a battery. The transmitting end coil may move in the vertical direction. For an illustrative introduction showing that the transmitting end coil is moved, reference can be made to the following descriptions of FIG. 4, which will not be repeated herein temporarily.

**An illustrative introduction to a process that the receiving end device is moved will be given below.**

**FIG. 3** **shows a schematic diagram showing that a receiving end device is moved.**

The transmitting end device may control, by means of motors, the clamp arms to move such that the clamp arms can move the receiving end device. A structure and a movement of one of the clamp arms will be described below, and a structure and a movement of the other one of the clamp arms are the same as those of the above one, which will not be repeated herein.

As shown in (1) of FIG. 3, the clamp arm 203a includes a tooth row 1 (such as a tooth row 301), and the tooth row 1 makes contact with a motor (such as a motor 302) corresponding to the clamp arm 203a. The motor corresponding to the clamp arm may be rotated to drive the tooth row 1 to move such that the clamp arm can be moved. After being moved, the clamp arm can be moved close to or push the receiving end device such that the receiving end device can be moved.

The motor corresponding to the clamp arm may be rotated in one direction (such as a counterclockwise direction or a clockwise direction) such that the clamp arm can be moved in a forward direction. By changing a rotation direction of the motor (that is, by rotating the motor in an opposite direction), a movement direction of the clamp arm will also be changed. As shown in (2) of FIG. 3, in some possible cases, a movement in a forward direction includes a movement in a horizontal direction to the transmitting end coil.

By moving a clamp arm in the forward direction, the clamp arm can draw back, and a visual length of the clamp arm can be shortened. By moving a clamp arm in an opposite direction, the clamp arm can stretch out, and a visual length of the clamp arm can be lengthened. As shown in (2) of FIG. 3, the clamp arm 203a has a visual length of L11, and the clamp arm 203b has a visual length of L21. After the clamp arm 203a is moved in an opposite direction and the clamp arm 203b is moved in a forward direction, the visual length of the clamp arm 203a is lengthened, and the visual length of the clamp arm 203b is shortened. For example, as shown in (3) of FIG. 3, the visual length of the clamp arm 203a becomes L12 (greater than L11), and the visual length of the clamp arm 203b becomes L22 (less than L21). In some possible cases, movement in an opposite direction includes: movement in a horizontal direction away from the transmitting end coil.

A movement rate of the clamp arm is affected by a rotation rate of the motor: the movement rate of the clamp arm is directly proportional to the rotation rate of the motor. The faster the rotation of the motor, the greater the movement rate of the clamp arm. The slower the rotation of the motor, the less the movement rate of the clamp arm.

It should be understood that in some possible cases, the motors corresponding to the two clamp arms may have the same rotation speed, such that the two clamp arms have the same movement speed. Moreover, a terminal and the clamp arm have the same movement speed. When the clamp arm is moved and pushes the receiving end device, a current of the motor corresponding to the clamp arm increases but is less than a preset current. An increased value is greater than change threshold 1. When the clamp arm is moved but does not push the receiving end device, the current of the motor corresponding to the clamp arm may not change and be less than the preset current, or a changed value is less than change threshold 2 and less than the preset current. Change threshold 1 is greater than change threshold 2. When the motor is rotated for the ith time, and a current change of the motor includes a change in a current when the motor is rotated for the ith time compared with a current when the motor is rotated for the (i-1)^{th} time. Therefore, when one clamp arm pushes the receiving end device to move, a current of a motor corresponding to the clamp arm is greater than a current of a motor corresponding to the other clamp arm.

It should be further understood that if the motor corresponding to the clamp arm stalls, it indicates that in a case that a rotation direction of the motor is not changed, a situation that the clamp arm corresponding to the motor is moved by rotating the motor can not be achieved. A case that a motor stalls means that the motor cannot rotate in one direction any more. After the rotation direction is changed, the motor can continue rotating. When a motor stalls, a current corresponding to the motor is much greater than a current when the motor does not stall. The current of the motor when the motor stalls may be greater than the preset current. For example, the preset current generally may be 5 times - 7 times a rated current.

It should be understood herein that a schematic diagram of a receiving end device shown in embodiments of the disclosure is merely for illustration, and there may be other shapes actually. For example, shapes of the clamp arms, and positions of the clamp arms in the receiving end device are illustrative descriptions. Actually, the clamp arms or may be in other shapes, and may be closer to or farther away from the device support base than those shown in the figure.

**An illustrative introduction to a process that a transmitting end coil is moved will be given below.**

**FIG. 4** **shows a schematic diagram showing that a transmitting end coil is moved.**

The transmitting end device may control the transmitting end coil to move by means of a motor corresponding to the transmitting end coil.

In some possible cases, as shown in (1) of FIG. 4, a transmitting end coil (401) is placed on a steel sheet (such as a steel sheet 402). The steel sheet includes a tooth row A (such as a tooth row 403). The tooth row A makes contact with a motor (such as a motor 404) corresponding to the transmitting end coil. The motor corresponding to the transmitting end coil may be rotated to drive the tooth row A to move such that the steel sheet can be moved. The movement of the steel sheet is the movement of the transmitting end coil. That is, the movement of the steel sheet is the same as the movement of the transmitting end coil.

As shown in (1) of FIG. 4, the motor (a motor 404) corresponding to the transmitting end coil may be rotated in a direction (such as a counterclockwise direction or a clockwise direction) such that the steel sheet (the steel sheet 402) including the transmitting end coil can be moved in a vertical direction (for example, vertically move downward). A schematic diagram after the movement may be shown in (2) of FIG. 4. Compared with (1) of FIG. 4, a vertical height of the motor corresponding to the transmitting end coil remains unchanged. The transmitting end coil and the steel sheet including the transmitting end coil have the same movement distance (L31) and direction.

It should be understood that a method for controlling the receiving end device to move shown in FIG. 3 and a method for controlling the transmitting end coil to move shown in FIG. 4 are illustrative descriptions. During actual application, the receiving end device and the transmitting end coil may be moved through other methods. For example, the clamp arm and the transmitting end coil may be controlled to move by using a joystick mechanism.

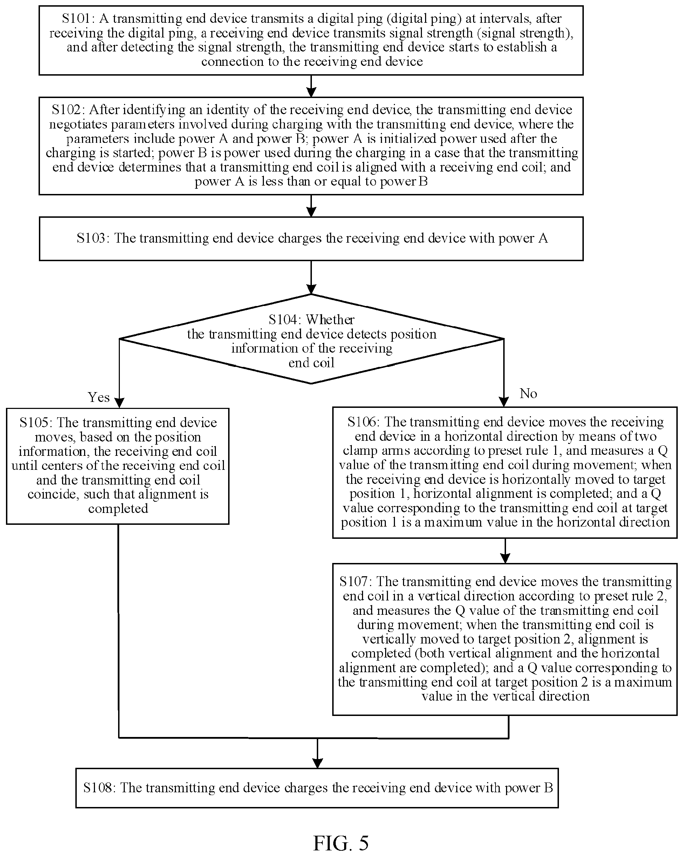

**FIG. 5** **shows a flow diagram of an example in which wireless charging is performed between a transmitting end device and a receiving end device.**

For a process that wireless charging is performed between a transmitting end device and a receiving end device, reference can be made to the following descriptions of S101-S108.

S101: The transmitting end device transmits a digital ping (digital ping) at intervals. After receiving the digital ping, the receiving end device transmits signal strength (signal strength). After detecting the signal strength, the transmitting end device indicates that a connection is established to the receiving end device.

Further, S101 is used to describe that the transmitting end device enters identification and configuration (identification & configuration) stages.

For other related descriptions of the identification and configuration stages, reference can be made to the following descriptions of S102. Wireless charging can be started after identification and configuration are completed.

An illustrative method through which the transmitting end device detects the receiving end device may include the following content.

After the receiving end device is started, a Q value may be periodically measured. In a case that the receiving end device detects that a change in the Q value reaches a preset degree, it is determined that the receiving end device or a metal foreign object enters a magnetic field range of the transmitting end device (or enters a ping region). The signal strength receiving a reply from the receiving end device indicates that the receiving end device is detected. The ping region includes a region in which the receiving end device can receive the digital ping (digital ping) transmitted by the transmitting end device. After the receiving end device enters the ping region, the transmitting end device can trigger a process that a connection is established to the receiving end device. The ping region may be generally set to: include a region which can make contact with the transmitting end device, or a region which is used for contact wireless charging but far away from a clamp arm, which fully stretches out, by a distance less than a preset distance (for example, 0.5 cm). The ping region or may be referred to as a power transferable region or a signal strength packet detectable region.

S102: After identifying an identity of the receiving end device, the transmitting end device negotiates parameters involved in charging with the transmitting end device. The parameters include power A and power B. Power A is initialized power used after charging is started. Power B is power used during charging when the transmitting end device determines that the transmitting end coil is aligned with the receiving end coil. Power A is less than or equal to power B.

The receiving end device transmits identity information to the transmitting end device. The identity information may be used to represent the receiving end device, and for example, may include a device ID corresponding to the receiving end device. The transmitting end device authenticates the receiving end device based on the identity information. After authentication is passed, the transmitting end device negotiates parameters involved in charging with the transmitting end device. The parameters include power A and power B. Power A is initialized power used after charging is started. Power B is power used during charging when the transmitting end device determines that the transmitting end coil is aligned with the receiving end coil. Power A is less than or equal to power B.

S103: The transmitting end device charges the receiving end device with power A.

Before whether the alignment is completed is determined, the transmitting end device charges the receiving end device with small power (power A). In a case that the receiving end device can be charged, problems such as severe heat generation due to a large deviation in positions of the two coils cannot be caused. After the alignment is completed is completed, the receiving end device is charged with large power (power B) such that charging efficiency can be improved.

In some possible cases, the transmitting end device transmits electromagnetic energy at power A by means of the transmitting end coil. The receiving end device receives some of the electromagnetic energy, rectifies and filters the electromagnetic energy, and inputs the electromagnetic energy into a battery.

For content involved in the alignment between the transmitting end device and the receiving end device, reference can be made to the following descriptions of S104-S108.

S104: Whether the transmitting end device detects position information of the receiving end coil.

In a case that the transmitting end device detects the position information of the receiving end coil, S105 mentioned below may be performed such that the two coils (the transmitting end coil and the receiving end coil) can be aligned with each other based on the position information.

In a case that the transmitting end device does not detect the position information of the receiving end coil, S106 mentioned above may be performed. That is, the receiving end device is horizontally moved such that horizontal alignment can be implemented. Moreover, S107 may be performed. That is, the transmitting end coil is vertically moved such that vertical alignment can be implemented.

S105: Based on the position information, the transmitting end device moves the receiving end coil until centers of the receiving end coil and the transmitting end coil coincide, such that alignment is completed.

In a case that the transmitting end device detects the position information of the receiving end coil, S105 mentioned below may be performed. This case generally occurs in a case that the receiving end device can identify a position relative to that of the transmitting end device. The position information transmitted by the receiving end device to the transmitting end device describes a position of the center of the receiving end coil relative to a reference coordinate system.

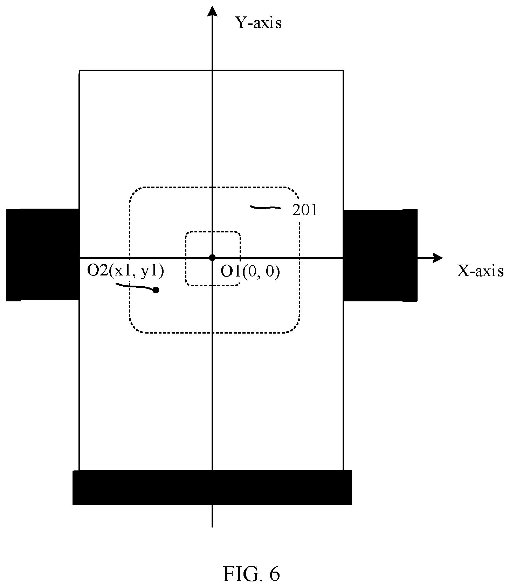

**FIG. 6** **shows a diagram of an example of a reference coordinate** system **and position information.**

As shown in FIG. 6, a center of a transmitting end coil (for example, a coil 201) may be used as an origin of a reference coordinate system. For example, point O1 (0, 0) in FIG. 6 may be considered as the origin of the reference coordinate system. A horizontal central axis of a transmitting end coil is taken as an X-axis, and a vertical central axis of the transmitting end coil is taken as a Y-axis. Position information of a transmitting end device shows a position of a center of a receiving end coil relative to the reference coordinate system. The position information may be represented as a value from the X-axis and a value from the Y-axis, and the unit may be millimeter. For example, O2 (x1, y1) shown in FIG. 6 may be a center of an illustrative receiving end coil.

In a case that x1 is a negative value, the transmitting end device controls a clamp arm to horizontally move the receiving end device by x1 millimeter along a positive half axis of the X-axis such that horizontal alignment can be completed. In a case that x1 is a positive value, the transmitting end device controls a clamp arm to horizontally move the receiving end device by x1 millimeter along a negative half axis of the X-axis such that horizontal alignment can be completed. In a case that y1 is a negative value, the transmitting end device controls the transmitting end coil to vertically move y1 millimeter along a negative half axis of the Y-axis such that horizontal alignment can be completed. In a case that y1 is a positive value, the transmitting end coil is vertically moved by y1 millimeter along a positive half axis of the Y-axis such that horizontal alignment can be completed.

It should be understood that the reference coordinate system shown in FIG. 6 is an illustrative description. During actual application, the reference coordinate system may be described in other manners. The description should not constitute a limitation to embodiments of the disclosure.

S106: The transmitting end device moves the receiving end device in a horizontal direction by means of two clamp arms according to preset rule 1, and measures a Q value of the transmitting end coil during movement. When the receiving end device is horizontally moved to target position 1, horizontal alignment is completed. A Q value corresponding to the transmitting end coil at target position 1 is a maximum value in the horizontal direction.

The maximum Q value in the horizontal direction includes a maximum Q value when the receiving end device is horizontally moved.

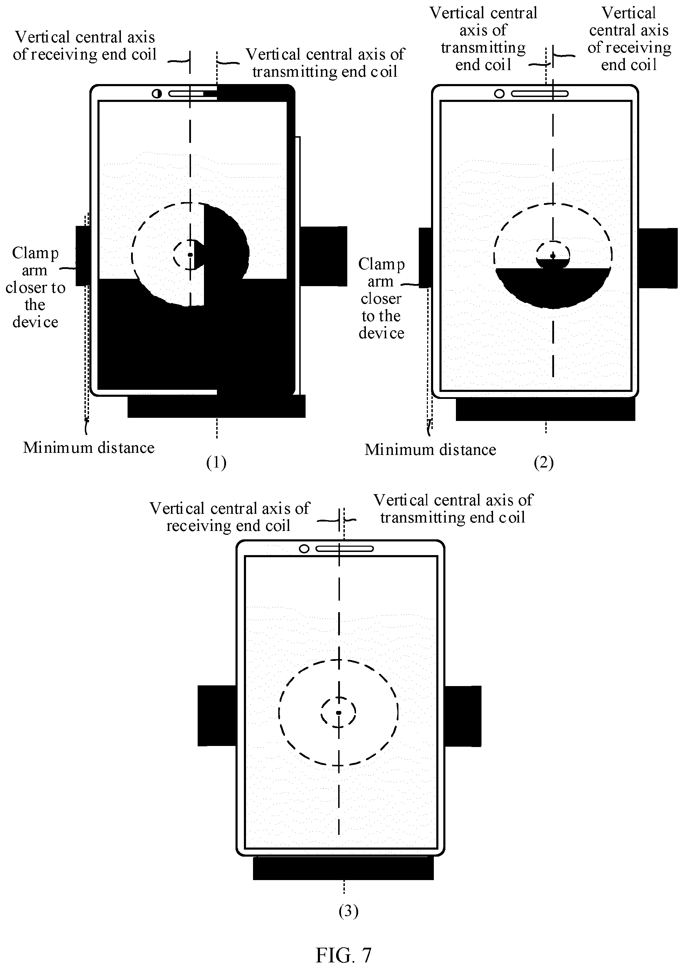

Preset rule 1 includes but is not limited to one or more of rules as follows:
**Rule 11:** A measured Q value continuously increases after the clamp arms start to be moved. After the receiving end device is moved to position 1 and the Q value is measured to increase, in cases that the Q value continuously decreases R times when the receiving end device continues being moved, the two clamp arms are caused to clamp the receiving end device, and the receiving end device is returned to position 1. Position 1 is target position 1. Specifically, R is an integer greater than or equal to 1, and generally 2. Rule 11 is applicable to a case that an initial state of the receiving end device placed on the transmitting end device is state A. As shown in (1) of FIG. 7, state A includes: before the transmitting end device moves the clamp arms, at least one clamp arm is closer to the device, and the vertical central axis of the receiving end coil is located between the vertical central axis of the transmitting end coil and the clamp arm closer to the device. The clamp arm closer to the device includes a clamp arm of the two clamp arms which is closer to the receiving end device in a case of a minimum distance (less than or equal to preset distance 1). Preset distance 1 may include a movement distance of the clamp arm when a motor corresponding to the clamp arm is moved T times. T is an integer greater than or equal to 1, and generally 2. For detailed descriptions of rule 11, reference can be made to the following descriptions of S20-S22, which will not be repeated herein.

**Rule 12:** After the clamp arms start to be moved, the receiving end device is moved. In a case that the measured Q value continuously decreases R times, the receiving end device is moved in an opposite direction. When the receiving end device is moved in an opposite direction, the Q value is measured to continuously increase. After the receiving end device is moved to position 2 and the Q value is measured to increase, in a case that the Q value continuously decreases R times when the receiving end device continues being moved, the two clamp arms are caused to clamp the receiving end device. The receiving end device is moved in the opposite direction again to be returned to position 2. Position 2 is target position 1. Rule 12 is applicable to a case that an initial state of the receiving end device placed on the transmitting end device is state B. As shown in (2) of FIG. 7, state B includes: before the transmitting end device moves the clamp arms, at least one clamp arm is closer to the device, and the vertical central axis of the receiving end coil is not located between the vertical central axis of the transmitting end coil and the clamp arm closer to the device. For detailed descriptions of rule 12, reference can be made to the following descriptions of S30-S33, which will not be repeated herein.

**Rule 13:** In cases that the receiving end device is not moved after the clamp arms start to be moved (at rate A1), and the Q value is measured to be continuously the same T times, the transmitting end device may increase movement speeds of the clamp arms such that the clamp arms can be moved close to the receiving end device faster, and the receiving end device can be moved. After it is determined that a clamp arm makes contact with the receiving end device, the clamp arm is moved again at rate A1. If the measured Q value continuously increases, horizontal alignment continues being performed with reference to rule 11 mentioned above. If the measured Q value continuously decreases, horizontal alignment continues being performed with reference to rule 12 mentioned above. If the measured Q value is continuously the same U times, it indicates that both the clamp arms make contact with the receiving end device, and a movement of the clamp arms cannot cause a movement of the receiving end device. However, in this case, whether the two coils are horizontally aligned with each other is not determined, and the receiving end device can be moved in a test direction. If the measured Q value continuously increases, horizontal alignment continues being performed with reference to rule 11 mentioned above. If the measured Q value continuously decreases R times, horizontal alignment continues being performed with reference to rule 12 mentioned above. Rule 13 is applicable to a case that an initial state of the receiving end device placed on the transmitting end device is state C. State C includes: distances between the two clamp arms and the receiving end device are greater than preset distance 1. As shown in (3) of FIG. 7, in this case, the receiving end device is approximately located at a center of the transmitting end device. For detailed descriptions of rule 13, reference can be made to the following descriptions of S40-S44b, which will not be repeated herein.

**Rule 14:** After the clamp arms are moved, no matter how the Q value changes, if the Q value is continuously the same U times, it indicates that both the clamp arms make contact with the receiving end device, and a movement of the clamp arms cannot cause a movement of the receiving end device. However, in this case, whether the two coils are horizontally aligned with each other is not determined, and the receiving end device can be moved in a test direction. If the measured Q value continuously increases, horizontal alignment continues being performed with reference to rule 11 mentioned above. If the measured Q value continuously decreases, horizontal alignment continues being performed with reference to rule 12 mentioned above.

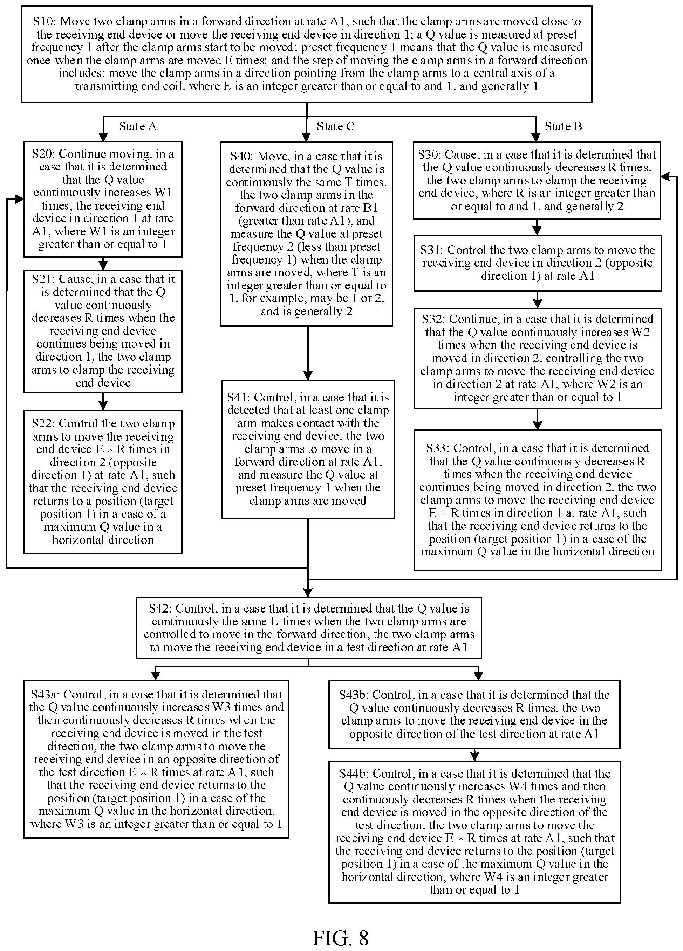

For detailed content involved in S106, reference can be made to the following descriptions of related content in FIG. 8, which will not be repeated herein temporarily.

S107: The transmitting end device moves the transmitting end coil in a vertical direction according to preset rule 2, and measures a Q value of the transmitting end coil during movement. When the transmitting end coil is vertically moved to target position 2, alignment is completed (both vertical alignment and horizontal alignment are completed). A Q value corresponding to the transmitting end coil at target position 2 is a maximum value in the vertical direction.

The maximum Q value in a vertical direction includes a maximum Q value reached when the transmitting end coil is vertically moved.

Preset rule 2 includes but is not limited to one or more of rules as follows:
**Rule 21:** After the transmitting end coil starts to be moved, a measured Q value continuously increases. After the transmitting end coil is moved to position 2 and the Q value is measured to increase, in a case that the Q value continuously decreases R times when the transmitting end coil continues being moved, the transmitting end coil is moved in an opposite direction to be returned to position 2. Position 2 is target position 2. For detailed descriptions of rule 21, reference can be made to the following descriptions of S202a-S203a, which will not be repeated herein.

**Rule 22:** In a case that the Q value is measured to continuously decrease R times after the transmitting end coil starts to be moved, the transmitting end coil is moved in an opposite direction. When the transmitting end coil is moved in the opposite direction, a measured Q value continuously increases. After the transmitting end coil is moved to position 2 and the Q value is measured to increase, in a case that the Q value continuously decreases R times when the transmitting end coil continues being moved, the transmitting end coil is moved in an opposite direction again to be returned to position 2. Position 2 is target position 2. For detailed descriptions of rule 22, reference can be made to the following descriptions of S202b-S204b, which will not be repeated herein.

It should be understood that in embodiments of the disclosure, the case that the Q value continuously decreases R times involved when the transmitting end coil is moved may be that the value decreases R times not continuously, or continuously decreases M times. Specifically, M is an integer greater than or equal to 1, and may be equal to R or not. An example in which M is equal to R is used for herein description.

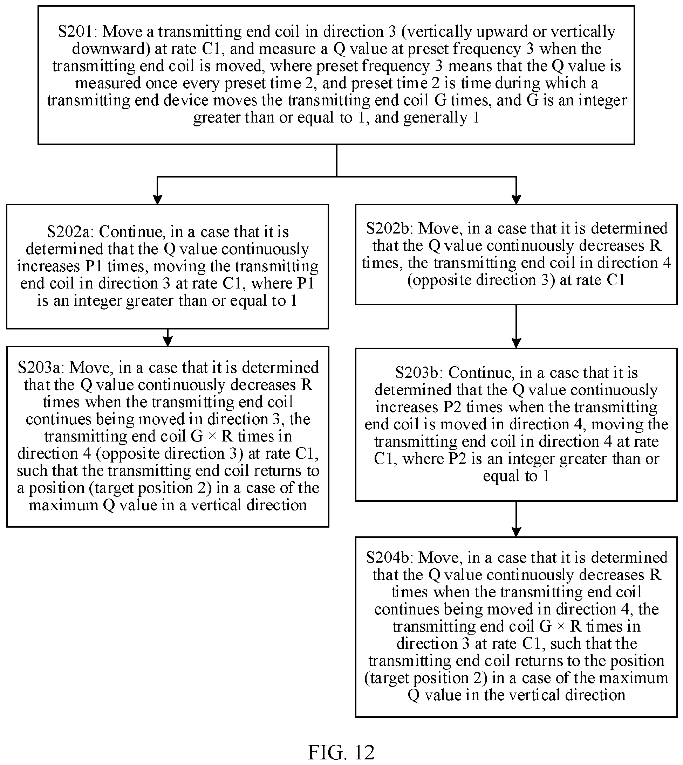

For detailed content involved in S107, reference can be made to the following descriptions of related content in FIG. 12, which will not be repeated herein temporarily.

S108: The transmitting end device charges the receiving end device with power B.

After it is determined that the alignment is completed, the transmitting end device charges the receiving end device with high power (power B) such that charging efficiency can be improved.

In some possible cases, the transmitting end device adjusts power with which the transmitting end coil transmits electromagnetic energy from power A to power B. Then, electromagnetic energy is transmitted at power B by means of the transmitting end coil. The receiving end device receives some of the electromagnetic energy, rectifies and filters the electromagnetic energy, and inputs the electromagnetic energy into a battery.

**FIG. 8** **shows a flow diagram of an example in which a transmitting end device implements horizontal alignment according to preset rule 1.**

For detailed content of horizontal alignment, reference can be made to the following descriptions of S10, S20-S22, S30-S33 and S40-S44b.

S10: The transmitting end device moves the two clamp arms in the forward direction at rate A1, such that the clamp arms are moved close to the receiving end device or the receiving end device is moved in direction 1. A Q value is measured at preset frequency 1 after the clamp arms start to be moved. Preset frequency 1 means that the Q value is measured once every preset time 1. Preset time 1 is time during which the transmitting end device moves the clamp arms E times. The step that the clamp arms are moved in the forward direction includes: the clamp arms are moved in a direction pointing from the clamp arms to the central axis of the transmitting end coil. Specifically, E is an integer greater than or equal to and 1, and generally 1. The step that the clamp arms are moved in the forward direction or may be understood as that the clamp arms continue being moved in a direction in which the clamp arms are moved for the first time.

In some possible cases, the transmitting end device moves when the clamp arms are moved. Preset time 1 may be time during which the transmitting end device moves the receiving end device E times. Preset frequency 1 may be understood as that the Q value is measured once when the clamp arm is moved E times. Since when the motor is rotated once, the clamp arm corresponding to the motor moves once, in some possible cases, preset frequency 1 or may be understood as that the Q value is measured once when the motor is rotated E times. First preset time may be counted from time when the clamp arm is moved for the first time.

In some possible cases, reference can be made to the content shown in (1) of FIG. 3, the transmitting end device may rotate the motor corresponding to the clamp arm at rate A2 such that the clamp arm can be moved at rate A1. Further, the clamp arm can move close to the receiving end device or move (horizontally move) the receiving end device. A movement rate of the clamp arm is affected by a rotation rate of a motor corresponding to the clamp arm: the movement rate of the clamp arm is directly proportional to the rotation rate of the motor. The faster the rotation of the motor, the greater the movement rate of the clamp arm. The slower the rotation of the motor, the less the movement rate of the clamp arm.

The transmitting end device moves the receiving end device in the horizontal direction by means of the two clamp arms according to preset rule 1 such that horizontal alignment can be completed. After the clamp arm starts to be moved, the Q value may be measured at preset frequency 1. Preset frequency 1 means that the Q value is measured once every preset time 1. Preset time 1 is time during which the transmitting end device moves the clamp arms E times. Specifically, E is an integer greater than or equal to 1, and generally 1.

The step that the clamp arms are moved in the forward direction includes: the clamp arms are moved in a direction pointing from the clamp arms to the central axis of the transmitting end coil. That is, a movement in a forward direction includes a movement in a horizontal direction to the transmitting end coil.

It should be understood herein that in some possible cases, when the clamp arms are moved in the forward direction, movement directions of the clamp arms are opposite.

It should be understood that when initial states of the receiving end device placed on the transmitting end device are different, Q value change results when the receiving end device is moved are different, and processing methods of the transmitting end device are different. Specifically, S20-S22 mentioned below describe a process that the transmitting end device completes horizontal alignment according to rule 11 in a case that the initial state is state A mentioned above. Further, S30-S33 mentioned below describe a process that the transmitting end device completes horizontal alignment according to rule 12 in a case that the initial state is state B mentioned above. Further, S40-S44b mentioned below describe a process that the transmitting end device completes horizontal alignment according to rule 13 in a case that the initial state is state C mentioned above.

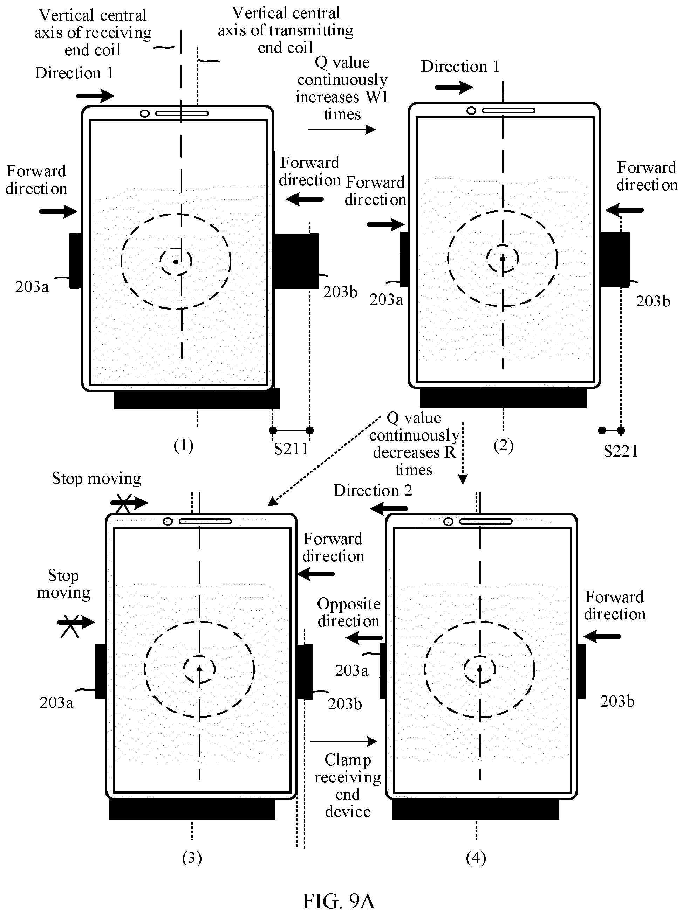

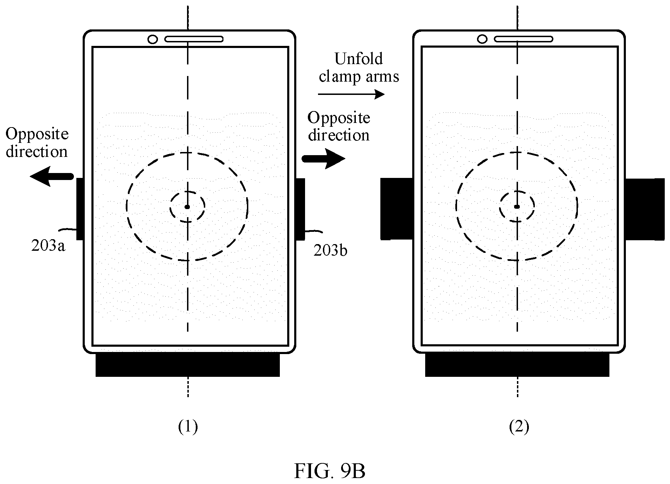

**FIG. 9A** **and** **FIG. 9B** **show schematic diagrams showing that horizontal alignment is completed in state A.**

A process that the transmitting end device completes the horizontal alignment according to rule 11 in a case that the initial state is state A involved above will be described below in combination with FIG. 9A, FIG. 9B and S20-S22. State A includes: As shown in (1) of FIG. 7, before the transmitting end device moves the clamp arms, at least one clamp arm is closer to the device, and the vertical central axis of the receiving end coil is located between the vertical central axis of the transmitting end coil and the clamp arm closer to the device.

S20: In a case that the transmitting end device determines that the Q value continuously increases W1 times, the receiving end device continues being moved in direction 1 at rate A1. Specifically, W1 is an integer greater than or equal to 1.

Further, a value of W1 is random, and the value of the W1 may be different in different cases.

Direction 1 is a direction in which the receiving end device is moved for the first time.

As shown in (1) of FIG. 9A, a minimum distance between a clamp arm 203a (a clamp arm closer to the device) and a receiving end device is less than or equal to preset distance 1. A vertical central axis of the receiving end coil is located between a vertical central axis of the transmitting end coil and the clamp arm closer to the device. In this case, by moving the clamp arm 203a in the forward direction at rate A1, the receiving end device can be pushed to move in direction 1. Moreover, the clamp arm 203b may be moved in the forward direction at rate A1 such that the clamp arm 203b may be moved close to the receiving end device (distance S221 is less than distance S211). During movement, the Q value is measured at preset frequency 1. Comparing (1) of FIG. 9A and (2) of FIG. 9A, during movement, vertical central axes of the two coils (the transmitting end coil and the receiving end coil) gradually move close to each other, such that a measured Q value continuously increases W1 times. Then, the receiving end device continues being moved in direction 1 at rate A1. As shown in (2) of FIG. 9A, the clamp arm 203a is moved in the forward direction such that the clamp arm 203a continues pushing the receiving end device to move in direction 1. Moreover, the clamp arm 203b is moved in the forward direction such that the clamp arm 203b continues being moved close to the receiving end device.

S21: When the receiving end device continues being moved in direction 1, in a case that the transmitting end device determines that the Q value continuously decreases R times, the two clamp arms are caused to clamp the receiving end device.

Comparing (2) of FIG. 9A and (3) of FIG. 9A, or comparing (2) of FIG. 9A and (4) of FIG. 9A, when the receiving end device continues being moved in direction 1, vertical central axes of the two coils (the transmitting end coil and the receiving end coil) gradually move away from each other, such that a measured Q value continuously decreases. With a movement to the position shown in (3) of FIG. 9A as an example herein, the transmitting end device determines that the Q value continuously decreases R times. In this case, the transmitting end device may cause the two clamp arms to clamp the receiving end device.

The step that the transmitting end device causes the two clamp arms to clamp the receiving end device includes: the wireless receiving end device first determines whether the motors corresponding to the two clamp arms stall. If the motors stall, it can be determined that the two clamp arms clamp the receiving end device. For a schematic diagram in which the two clamp arms clamp the receiving end device, reference can be made to the content shown in (4) of FIG. 9A. A method through which the wireless receiving end device determines whether a motor stalls is as follows: whether a current of the motor is greater than a preset current is determined. If yes, the motor stalls. In a case that a motor corresponding to at least one clamp arm does not stall, a relationship between currents of motors corresponding to the two clamp arms is determined. The motor having the larger current is stopped from being rotated, such that the clamp arm corresponding to the motor is stopped from being moved. Then, the motor having the smaller current continues being rotated, such that the clamp arm corresponding to the motor continues being moved close to the receiving end device. During movement, whether the motors corresponding to the two clamp arms stall continues being determined until it is determined that the motors corresponding to the two clamp arms stall, and it is determined that the two clamp arms clamp the receiving end device. In a case that a motor corresponding to one clamp arm does not stall, it indicates that there is a clamp arm which does not make contact with the receiving end device. In this case, reference can be made to the content shown in (3) of FIG. 9A. As shown in (3) of FIG. 9A, since the clamp arm 203a pushes the receiving end device to act, a current of a motor corresponding to the clamp arm 203a may be larger (compared with a motor corresponding to the clamp arm 203b). In this case, the receiving end device controls the motor corresponding to the clamp arm 203a to stop rotating, such that the clamp arm 203a and the receiving end device are stopped from being moved, and controls the motor corresponding to the clamp arm 203b to continue rotating, such that the clamp arm 203b makes contact with the receiving end device. For a schematic diagram after the two clamp arms clamp the receiving end device, reference can be made to (4) of FIG. 9A.

S22: The transmitting end device controls the two clamp arms to move the receiving end device E × R times at rate A1 in direction 2 (opposite direction 1) such that the receiving end device can be returned to a position (target position 1) in a case of a maximum Q value in the horizontal direction.

After the two clamp arms clamp the receiving end device, the transmitting end device may control the two clamp arms to move the receiving end device in an opposite direction E × R times (that is, rotate the motors corresponding to the clamp arms E × R times) such that the transmitting end device can be returned to the position (target position 1) in a case of the maximum Q value in the horizontal direction.

The reason for the movement of E × R times herein is that before the movement to position 1 for the first time, the transmitting end device may determine that the Q value increases. The clamp arms continue being moved during a subsequent movement to position 1, and the Q value decreases R times. In this case, it can be determined that position 1 is target position 1. Since the Q value is measured once when the clamp arms (or the motors) are moved E times, and the Q value continuously decreases R times, the transmitting end device can be returned to target position 1 through a movement in an opposite direction of E × R times. The opposite direction refers to opposite direction 2 opposite direction 1.

A process that the receiving end device is moved in an opposite direction to target position 1 includes: a motor having a smaller initial current of the motors corresponding to the two clamp arms is rotated, and the clamp arm corresponding to the motor having the smaller initial current is moved in the forward direction at rate A1. Moreover, a motor having a larger initial current of the motors corresponding to the two clamp arms is rotated in an opposite direction, the clamp arm corresponding to the motor having a larger initial current is moved in an opposite direction at rate A1. After a movement of E × R times, the clamp arm is stopped from being moved, such that the two clamp arms move the receiving end device in direction 2 (opposite direction 1) to target position 1. The clamp arm corresponding to the motor having the smaller initial current may be referred to as a first clamp arm herein, and the clamp arm having the larger initial current may be referred to as a second clamp arm. A process that the receiving end device is moved in an opposite direction to target position 1 is equivalent to a process that the receiving end device is pushed based on the second clamp arm. The initial current of the motor includes a current corresponding to the motor acquired in a case that a Q value continuously increases and then continuously decreases Q times when the receiving end device is moved.

As shown in (4) of FIG. 9A, the transmitting end device may move the clamp arm 203a in the opposite direction, and move the clamp arm 203b in the forward direction such that the receiving end device can be pushed to move in direction 2 to target position 1, and horizontal alignment can be completed. For content of an example after horizontal alignment is completed, reference can be made to the content shown in (1) of FIG. 9B. In this case, vertical central axes of the two coils coincide.

In some possible cases, after the horizontal alignment is completed, the transmitting end device may unfold the clamp arms such that the receiving end device cannot be clamped by the clamp arms, and the receiving end device can be conveniently taken. Comparing (1) of FIG. 9B and (2) of FIG. 9B, the transmitting end device may move the clamp arm 203a in an opposite direction and move the clamp arm 203b in an opposite direction such that the clamp arms can be unfolded. For a schematic diagram after the clamp arms are unfolded, reference can be made to the content shown in (2) of FIG. 9B.

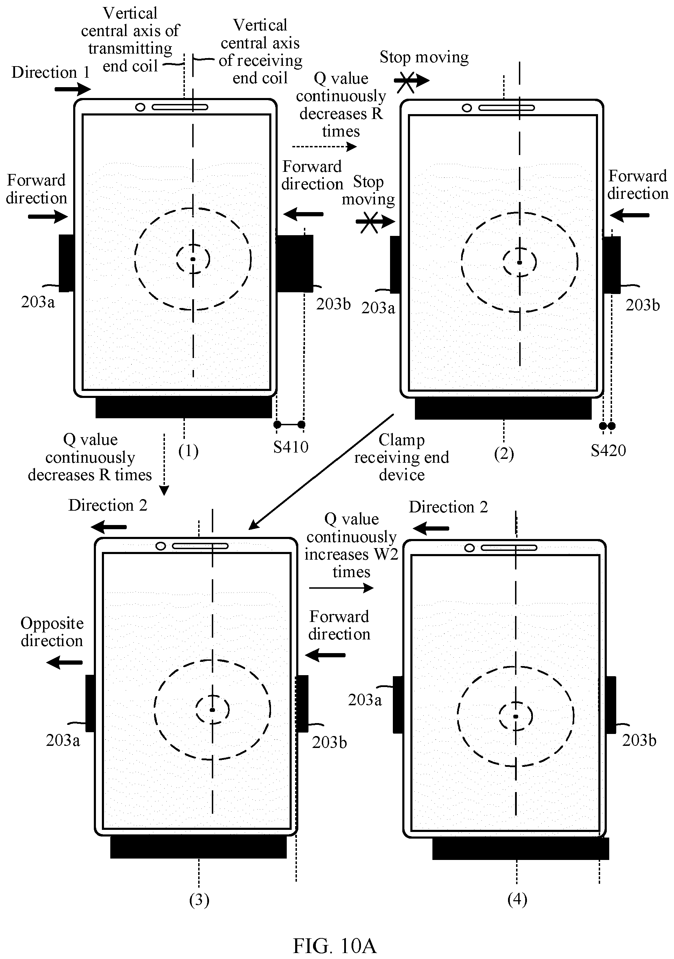

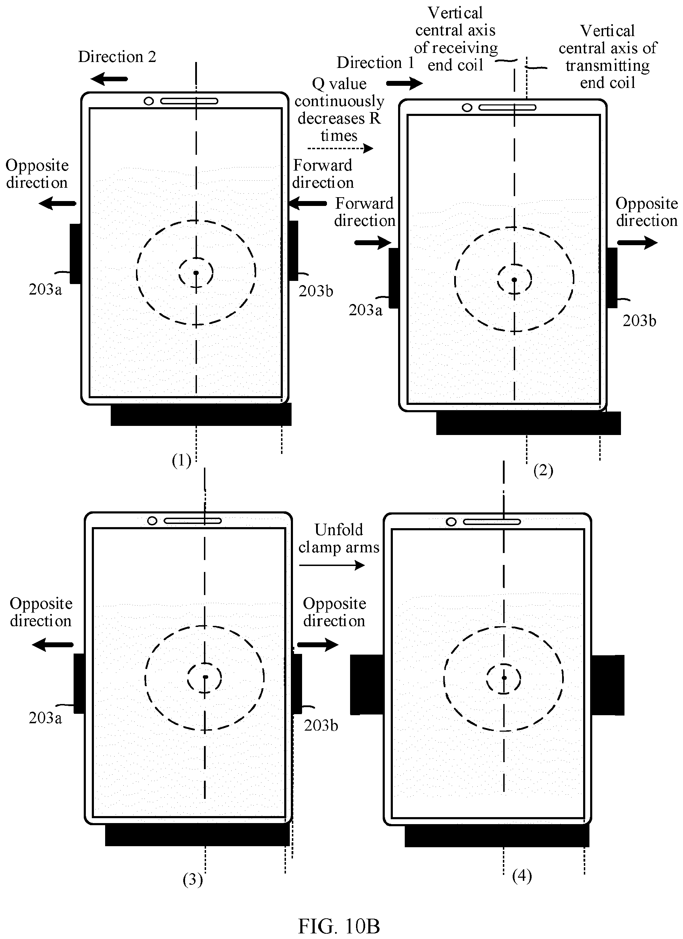

**FIG. 10A** **and** **FIG. 10B** **show schematic diagrams showing that horizontal alignment is completed in state B.**

A process that the transmitting end device completes horizontal alignment according to rule 12 in a case that the initial state is state B involved above will be described below in combination with FIG. 10A, FIG. 10B and S30-S33. State B includes: As shown in (2) of FIG. 7, before the transmitting end device moves the clamp arms, at least one clamp arm is closer to the device, and the vertical central axis of the receiving end coil is not located between the vertical central axis of the transmitting end coil and the clamp arm closer to the device.

S30: The transmitting end device causes, in a case that it is determined that the Q value continuously decreases R times, the two clamp arms to clamp the receiving end device. Specifically, R is an integer greater than or equal to and 1, and generally 2.

As shown in (1) of FIG. 10A, a minimum distance between a clamp arm 203 (a clamp arm closer to the device) and a receiving end device is less than or equal to preset distance 1. A vertical central axis of the receiving end coil is located between a vertical central axis of the transmitting end coil and the clamp arm closer to the device. In this case, by moving the clamp arm 203a in the forward direction, the receiving end device can be pushed to move in direction 1. Moreover, the clamp arm 203b may be moved in the forward direction such that the clamp arm 203b may be moved close to the receiving end device (distance S420 is less than distance S410). During movement, the Q value is measured at preset frequency 1. Comparing (1) of FIG. 10A and (2) of FIG. 10A, during movement, vertical central axes of the two coils (the transmitting end coil and the receiving end coil) gradually move away to each other, such that a measured Q value continuously increases. A movement to the position shown in (2) of FIG. 10A is used as an example herein.

In a case that the transmitting end device determines that the Q value continuously decreases R times, the transmitting end device may cause the two clamp arms to clamp the receiving end device. As shown in (2) of FIG. 10A, since the clamp arm 203a pushes the receiving end device to act, a current of a motor corresponding to the clamp arm 203a may be larger (compared with a motor corresponding to the clamp arm 203b). In this case, the receiving end device controls the motor corresponding to the clamp arm 203a to stop rotating, such that the clamp arm 203a and the receiving end device are stopped from being moved, and controls the motor corresponding to the clamp arm 203b to continue rotating, such that the clamp arm 203b makes contact with the receiving end device. For a schematic diagram after the two clamp arms clamp the receiving end device, reference can be made to (3) of FIG. 10A.

For the content involved in a case that the wireless receiving end device causes the two clamp arms to clamp the receiving end device, reference can also be made to the above descriptions of the related content, which will not be repeated herein.

S31: The two clamp arms are controlled to move the receiving end device in direction 2 (opposite direction 1) at rate A1.

After the two clamp arms clamp the receiving end device, the transmitting end device can control the two clamp arms to move the receiving end device in an opposite direction. The opposite direction refers to opposite direction 2 opposite direction 1.

A process that the receiving end device is moved in direction 2 includes: a motor having a smaller current of the motors corresponding to the two clamp arms continues being rotated, such that the clamp arm corresponding to the motor having the smaller current is moved in the forward direction at rate A1. Moreover, a motor having a larger current of the motors corresponding to the two clamp arms continues being rotated in an opposite direction, such that the clamp arm corresponding to the motor having the larger initial current is moved in the opposite direction at rate A1. As shown in (3) of FIG. 10A, since the clamp arm 203a pushes the receiving end device to move and act, a motor corresponding to the clamp arm 203a has a larger current. Therefore, the transmitting end device can rotate the motor corresponding to the clamp arm 203a in an opposite direction such that the clamp arm 203a can be moved in an opposite direction, and rotate the motor corresponding to the clamp arm 203b in a forward direction such that the clamp arm 203b can push the receiving end device to move in direction 2.

S32: The transmitting end device continues, in a case that it is determined that the Q value continuously increases W2 times when the receiving end device is moved in direction 2, controlling the two clamp arms to move the receiving end device in direction 2 at rate A1. Specifically, W2 is an integer greater than or equal to 1.

Further, a value of W2 is random, and the value of W2 may be different in different cases.

As shown in (3) of FIG. 10A and (4) of FIG. 10A, the transmitting end device may move the clamp arm 203a in the opposite direction, and move the clamp arm 203b in the forward direction such that the receiving end device can be pushed to move in direction 2. In this way, vertical central axes of the two coils (the transmitting end coil and the receiving end coil) gradually move close to each other such that a measured Q value can continuously increase W2 times. Then, the receiving end device continues being moved in direction 2 at rate A1.

S33: The transmitting end device controls, in a case that it is determined that the Q value continuously decreases R times when the receiving end device continues being moved in direction 2, the two clamp arms to move the receiving end device E × R times in direction 1 at rate A1 such that the receiving end device can be returned to the position (target position 1) in a case of a maximum Q value in the horizontal direction.

Comparing (1) of FIG. 10B and (2) of FIG. 10B, the transmitting end device may move the clamp arm 203a in the opposite direction, and move the clamp arm 203b in the forward direction such that the receiving end device can be pushed to move in direction 2. In this way, vertical central axes of the two coils (the transmitting end coil and the receiving end coil) gradually move away to each other such that a measured Q value can continuously decrease. In a case that it is determined that the Q value continuously decreases R times, the transmitting end device may control the two clamp arms to move the receiving end device in opposite direction (in direction 1) again E × R times at rate A1 such that the receiving end device can be returned to target position 1.

A process that the receiving end device is moved in an opposite direction to target position 1 includes: a motor having a smaller initial current of the motors corresponding to the two clamp arms is rotated, and the clamp arm corresponding to the motor having the smaller initial current is moved in the forward direction at rate A1. Moreover, a motor having a larger initial current of the motors corresponding to the two clamp arms is rotated in an opposite direction, the clamp arm corresponding to the motor having a larger initial current is moved in an opposite direction at rate A1. After a movement of E × R times, the clamp arm is stopped from being moved, such that the two clamp arms move the receiving end device in direction 2 (opposite direction 1) to target position 1. For a process that the receiving end device is moved in direction 1 to be returned to target position 1, reference can be made to the following descriptions of (2) of FIG. 10B and (3) of FIG. 10B. Before the receiving end device is moved in the opposite direction, since the clamp arm 203b pushes the receiving end device to act, a motor corresponding to the clamp arm 203b has a larger current, and a motor corresponding to the clamp arm 203a has a smaller current. Then, the receiving end device rotates the motor corresponding to the clamp arm 203a in an opposite direction such that the clamp arm 203a can be moved in the forward direction, and rotates the motor corresponding to the clamp arm 203b in an opposite direction such that the clamp arm 203b can be moved in the opposite direction. In this way, the receiving end device can be pushed to move in direction 1 to target position 1 such that horizontal alignment can be completed. For content of an example after the horizontal alignment is completed, reference can be made to the content shown in (3) of FIG. 10B. In this case, vertical central axes of the two coils coincide.

In some possible cases, after the horizontal alignment is completed, the transmitting end device may unfold the clamp arms such that the receiving end device cannot be clamped by the clamp arms, and the receiving end device can be conveniently taken. Comparing (3) of FIG. 10B and (4) of FIG. 10B, the transmitting end device may move the clamp arm 203a in an opposite direction and move the clamp arm 203b in an opposite direction such that the clamp arms can be unfolded. For a schematic diagram after the clamp arms are unfolded, reference can be made to the content shown in (4) of FIG. 10B.

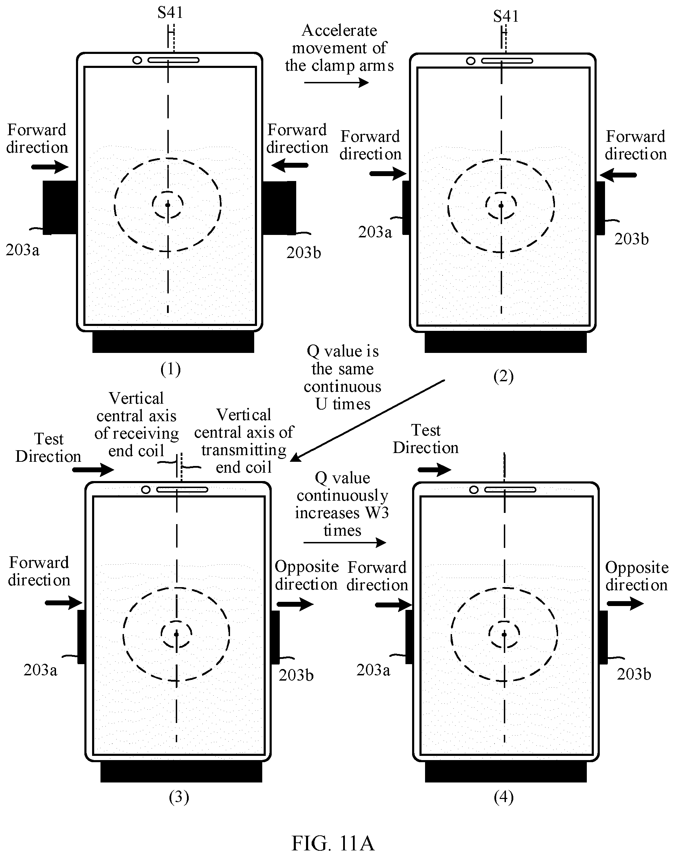

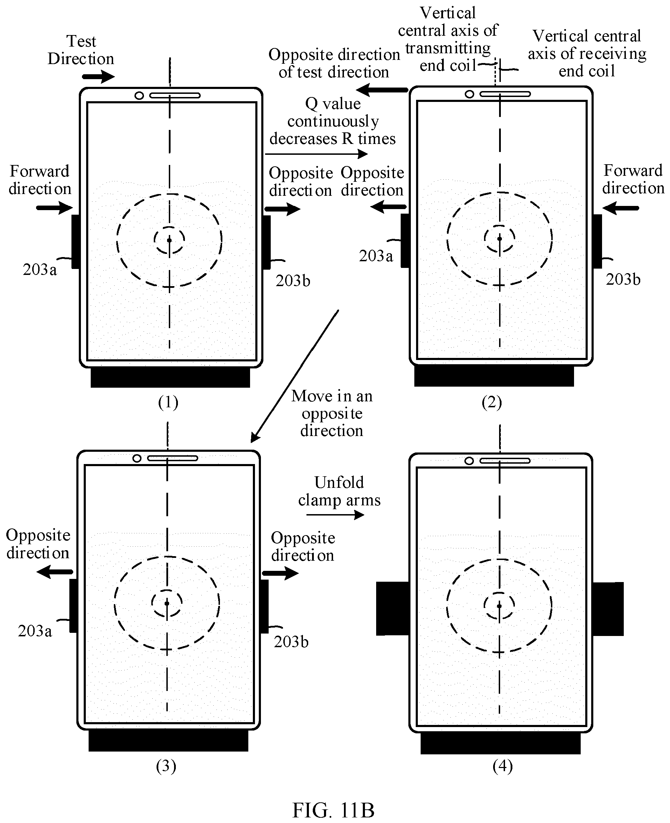

**FIG. 11A** **and** **FIG. 11B** **show schematic diagrams showing that horizontal alignment is completed in state C.**

A process that the transmitting end device completes horizontal alignment according to rule 11 in a case that the initial state is state C involved above will be described below in combination with FIG. 11A, FIG. 11B and S40-S44b. State C includes: As shown in (3) of FIG. 7, distances between the two clamp arms and the receiving end device are greater than preset distance 1.

S40: The transmitting end device moves, in a case that it is determined that the Q value is continuously the same T times, the two clamp arms in the forward direction at rate B1 (greater than rate A1), and measures the Q value at preset frequency 2 (less than preset frequency 1) when the clamp arms are moved. Specifically, T is an integer greater than or equal to 1, for example, may be 1 or 2, and generally 2.

As shown in (1) of FIG. 11A, the two clamp arms (including a clamp arm 203a and a clamp arm 203b) are far away from the receiving end device. Therefore, the receiving end device does not move when the clamp arms are moved in the forward direction, and the Q value does not change. Comparing (1) of FIG. 11A and (2) of FIG. 11A, in a case that it is determined that the Q value is continuously the same T times, the transmitting end device may accelerate the movement of the clamp arms such that at least one clamp arm can rapidly make contact with the receiving end device.

S41: In a case that it is detected that at least one clamp arm makes contact with the receiving end device, the two clamp arms are controlled to move in a forward direction at rate A1, and the Q value is measured at preset frequency 1 when the clamp arms are moved.

A case that at least one clamp arm makes contact with the receiving end device includes but is not limited to:
case 11: one clamp arm makes contact with the receiving end device, and the other clamp arm does not make contact with the receiving end device. In this case, when the transmitting end device controls the two clamp arms to move in the forward direction at rate A1, the receiving end device can be pushed to move in direction 1. After the movement is started, vertical central axes of the two coils can move close to or away from each other. For a process that after the movement is started, when the vertical central axes of the two coils move close to each other, horizontal alignment is implemented, reference can be made to the above descriptions of S20-S22, FIG. 9A and FIG. 9B, which will not be repeated herein. For a process that after the movement is started, when the vertical central axes of the two coils move away from each other, horizontal alignment is implemented, reference can be made to the above descriptions of S30-S33, FIG. 10A and FIG. 10B, which will not be repeated herein.

Case 12: the two clamp arms make contact with the receiving end device. In this case, when the transmitting end device controls the two clamp arms to move in the forward direction, acting forces of the two clamp arms cancel each other out. In this case, the receiving end device does not move such that the Q value cannot change. In this case, for related descriptions of a case that the transmitting end device implements horizontal alignment, reference can be made to the following descriptions of S42, S43a, S43b and S44b.

S42: The transmitting end device controls, in a case that it is determined that the Q value is continuously the same U times when the two clamp arms are controlled to move in the forward direction, the two clamp arms to move the receiving end device in a test direction at rate A1.

The test direction is random, and may be horizontally left or horizontal right, and may be considered as a direction in which the receiving end device is moved for the first time. In some possible cases, the test direction may be direction 1 mentioned above.

As shown in (2) of FIG. 11A, the two clamp arms (including a clamp arm 203a and a clamp arm 203b) make contact with the receiving end device. In this case, when the transmitting end device controls the two clamp arms to move in the forward direction, acting forces of the two clamp arms cancel each other out. In this case, the receiving end device does not move such that the Q value cannot change. In this case, relative positions of the vertical central axes of the two coils do not change. For example, the distances between the two coils are S41 shown in (1) of FIG. 11A and (2) of FIG. 11A.

In a case that the transmitting end device determines that the Q value is continuously the same U times, the two clamp arms can be controlled to move the receiving end device in the test direction at rate A1 such that horizontal alignment can be implemented. A process that the two clamp arms are controlled to move the receiving end device in the test direction at rate A1 includes: the motor corresponding to one clamp arm is rotated in an opposite direction such that the clamp arm can be moved in an opposite direction, and the motor corresponding to the other clamp arm is rotated such that the clamp arm can be moved in a forward direction. In this way, the receiving end device can be pushed to move.

After the two clamp arms are controlled to move the receiving end device in the test direction at rate A1, the initial change of the Q value may include an increase or a decrease. In a case that the initial change of the Q value is the increase, reference can be made to the following descriptions of S43a. In a case that the initial change of the Q value is the decrease, reference can be made to the following descriptions of S43b and S44b, which will not be repeated herein.

S43a: The transmitting end device controls, in a case that it is determined that the Q value continuously increases W3 times and then continuously decreases R times when the receiving end device is moved in the test direction, the two clamp arms to move the receiving end device in an opposite direction of the test direction E × R times at rate A1 such that the receiving end device can be returned to the position (target position 1) in a case of the maximum Q value in the horizontal direction. Specifically, W3 is an integer greater than or equal to 1

Further, a value of W3 is random, and the value of W3 may be different in different cases.

As shown in (3) of FIG. 11A, the transmitting end device controls the clamp arm 203a to move in the forward direction and controls the clamp arm 203b to move in the opposite direction such that the receiving end device can be moved in the test direction. Comparing (3) of FIG. 11A and (4) of FIG. 11A, when the receiving end device is moved, the vertical central axis of the receiving end coil gradually moves close to the vertical central axis of the transmitting end coil. In this process, the Q value continuously increases. For illustrative display of a case that the transmitting end device continuously determines the Q value W3 times, reference can be made to the content of (4) of FIG. 11A. Then, the transmitting end device continues controlling the clamp arm 203a to move in the forward direction and controls the clamp arm 203b to move in the opposite direction such that the receiving end device can continue moving in the test direction.

Comparing (1) of FIG. 11B and (2) of FIG. 11B, the clamp arm 203a continues being controlled to be moved in the forward direction, and the clamp arm 203b continues being controlled to be moved in the opposite direction such that when the receiving end device continues being moved in the test direction, the vertical central axis of the receiving end coil gradually can move away from the vertical central axis of the transmitting end coil, and the Q value decreases. After the Q value is measured to continuously decrease R times, the transmitting end device may control the clamp arm 203a to move in an opposite direction, and control the clamp arm 203b to move in a forward direction such that the receiving end device can be moved in an opposite direction to target position 1, and horizontal alignment can be completed. For content of an example after the horizontal alignment is completed, reference can be made to the content shown in (3) of FIG. 11B. In this case, vertical central axes of the two coils coincide. For the descriptions of a case that the receiving end device is moved in an opposite direction to target position 1, reference can be made to the above descriptions of a case that the receiving end device is moved in an opposite direction in S22 and S33, which will not be repeated herein again.

In some possible cases, after the horizontal alignment is completed, the transmitting end device may unfold the clamp arms such that the receiving end device cannot be clamped by the clamp arms, and the receiving end device can be conveniently taken. Comparing (3) of FIG. 11B and (4) of FIG. 11B, the transmitting end device may move the clamp arm 203a in an opposite direction and move the clamp arm 203b in an opposite direction such that the clamp arms can be unfolded. For a schematic diagram after the clamp arms are unfolded, reference can be made to the content shown in (4) of FIG. 11B.

S43b: The transmitting end device controls, in a case that it is determined that the Q value continuously decreases R times, the two clamp arms to move the receiving end device in the opposite direction of the test direction at rate A1.

The principle of S43b is the same as that of the content involved in S30 and S31 mentioned above, as long as the content that the two clamp arms are caused to clamp the receiving end device is not involved. Since in S43b, the two clamp arms make contact with the receiving end device, the receiving end device is clamped. For details, reference can be made to the descriptions of S30-S31 mentioned above, which will not be repeated herein.

S44b: The transmitting end device controls, in a case that it is determined that the Q value continuously increases W4 times and then continuously decreases R times when the receiving end device is moved in the opposite direction of the test direction, the two clamp arms to move the receiving end device E × R times at rate A1 such that the receiving end device can be returned to the position (target position 1) in a case of the maximum Q value in the horizontal direction. Specifically, W4 is an integer greater than or equal to 1.

The principle of S44b is the same as that of the content involved in S32 and S33 mentioned above. For details, reference can be made to the descriptions of S32-S33 mentioned above, which will not be repeated herein.

It should be understood that in FIG. 8 and related content thereof mentioned above, regardless of the initial state of the receiving end device and the transmitting end device, when the receiving end device is controlled to horizontally move, the receiving end device can be moved in an opposite direction to target position 1 only in a case that a first condition is satisfied. The first condition is that the Q value is required to continuously increase and then it is determined that the Q value continuously decreases R times. That is, the first condition may be understood as that the Q value continuously increases before the receiving end device is moved to target position 1, and continuously decreases R times after the receiving end device is moved to target position 1. Target position 1 may be referred to as a first position. When the Q value continuously increases and then continuously decreases R times, a movement direction of the receiving end device may be referred to as a first direction. For example, the first direction may be direction 1 involved in S20-S22 mentioned above; may be direction 2 involved in S31-S33 mentioned above; and may be a prediction direction involved in S43a, or may be an opposite direction of the prediction direction involved in S43b and S44b. The clamp arm which pushes the receiving end device to horizontally move in the first direction may be referred to as a first clamp arm. In a case that the receiving end device satisfies a first condition, the clamp arm which is moved in an opposite direction is a second clamp arm.

**FIG. 12** **shows a flow diagram of an example in which a transmitting end device implements vertical alignment according to preset rule 2.**

For detailed content of vertical alignment, reference can be made to the following descriptions of S201-S204b.

S201: A transmitting end coil is moved in direction 3 (vertically upward or vertically downward) at rate C1, and a Q value is measured at preset frequency 3 when the transmitting end coil is moved. Preset frequency 3 means that the Q value is measured once every preset time 2. Preset time 2 is time during which a transmitting end device moves the transmitting end coil G times. Specifically, G is an integer greater than or equal to 1, and generally 1.

Rate C1 may be the same as or different from preset rate A1 mentioned above. Preset frequency 3 or may be the same as or different from preset rate 1 involved in the above descriptions, which is not limited in embodiments of the disclosure.

In some possible cases, reference can be made to the content shown in (1) of FIG. 4 and (2) of FIG. 4. The transmitting end device may rotate the motor corresponding to the transmitting end coil at rate C2 such that the transmitting end coil can move (vertically move) in direction 3 at rate C1. A rate at which the transmitting end coil is moved is affected by a rotation rate of a motor corresponding to the transmitting end coil. A rate at which the transmitting end coil is moved is directly proportional to a rotation rate of the motor. The faster the rotation of the motor, the greater the movement rate of the transmitting end coil. The slower the rotation of the motor, the less the movement rate of the transmitting end coil.

The transmitting end device moves the transmitting end coil according to preset rule 2 such that vertical alignment can be completed. Preset rule 2 includes preset rule 21 and rule 22 involved in the above.

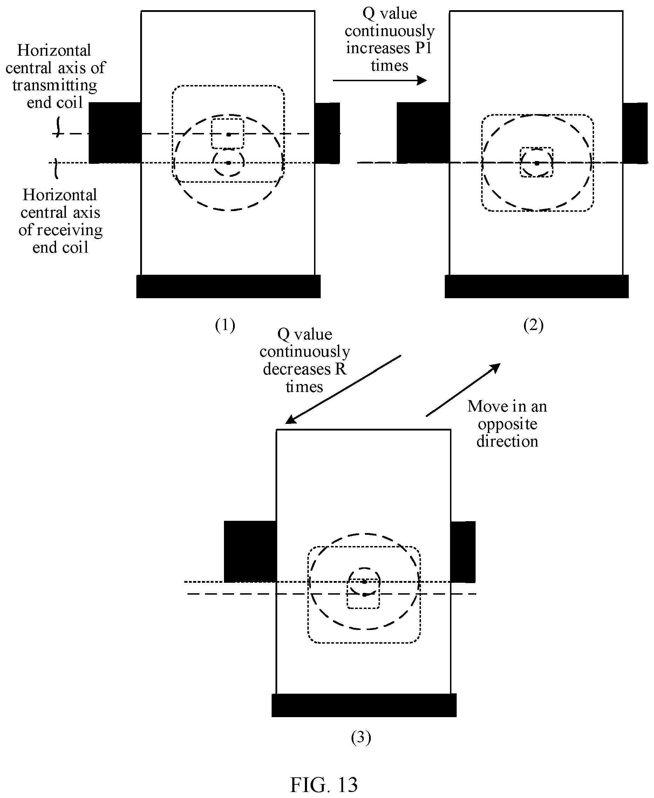

Rule 21 describes a vertical alignment manner involved in a case that an initial change state of the Q value is that the Q value increases when the transmitting end coil is moved. For detailed descriptions of rule 21, reference can be made to the following descriptions of FIG. 13 and S202a-S203a.

**FIG. 13** **shows a schematic diagram showing that a transmitting end coil is moved.**

**Further, S202a-S203a will be described below in combination with** **FIG.** 13.

S202a: In a case that it is determined that the Q value continuously increases P1 times, the transmitting end coil continues to be moved in direction 3 at rate C1. Specifically, P1 is an integer greater than or equal to 1.

Further, P1 is an integer greater than or equal to 1, a value of P1 is random, and the value of P1 may be different in different cases.

Comparing (1) of FIG. 13 and (2) of FIG. 13, it can be known that the horizontal central axis of the transmitting end coil gradually moves close to the horizontal central axis of the receiving end coil such that the measured Q value can continuously increase P1 times. In some possible cases, a horizontal central axis of the receiving end coil is a line which passes a center of the receiving end coil and is parallel to a horizontal side of the receiving end device.

S203a: In a case that it is determined that the Q value continuously decreases R times when the transmitting end coil continues being moved in direction 3, the transmitting end coil is moved G × R times in direction 4 (opposite direction 3) at rate C1 such that the transmitting end coil can be returned to a position (target position 2) in a case of the maximum Q value in a vertical direction.

As shown in (2) of FIG. 13, a horizontal central axis of the transmitting end coil and a horizontal central axis of the receiving end coil coincide. However, the transmitting end device does not determine that the transmitting end coil reaches target position 2 in this case. The transmitting end coil continues being moved in direction 3, and it can be determined that the Q value continuously decreases R times. In this case, for the position of the transmitting end coil relative to the receiving end coil, reference can be made to the content shown in (3) of FIG. 13. Then, the transmitting end coil is moved in direction 4 (opposite direction 3) G × R times at rate C1 to be returned to target position 2.

Rule 22 describes a vertical alignment manner involved in a case that an initial change state of the Q value is that the Q value decreases when the transmitting end coil is moved. For detailed descriptions of rule 22, reference can be made to the following descriptions of S202b-S204b.

S202b: In a case that it is determined that the Q value continuously decreases R times, the transmitting end coil is moved in direction 4 (opposite direction 3) at rate C1.

When being moved, the transmitting end coil gradually moves away from the receiving end coil such that the Q value can decrease. In a case that it is determined that the Q value continuously decreases R times, the transmitting end coil is moved in direction 4 (opposite direction 3) at rate C1.

S203b: In a case that it is determined that the Q value continuously increases P2 times when the transmitting end coil is moved in direction 4, the transmitting end coil continues being moved in direction 4 at rate C1. Specifically, P2 is an integer greater than or equal to 1.

The principle of S203b is the same as that of S202a mentioned above. The movement direction of the transmitting end coil may be correspondingly changed. Reference can be made to the above descriptions of S202a, which will not be repeated herein.

S204b: In a case that it is determined that the Q value continuously decreases R times when the transmitting end coil continues being moved in direction 4, the transmitting end coil is moved G × R times in direction 3 at rate C1 such that the transmitting end coil can be returned to the position (target position 2) in a case of the maximum Q value in the vertical direction.

The principle of S204b is the same as that of S203a mentioned above. The movement direction of the transmitting end coil may be correspondingly changed. Reference can be made to the above descriptions of S203a, which will not be repeated herein.

It should be understood that in some possible cases, in addition to controlling the receiving end device to move by means of the clamp arms, the receiving end device can also be controlled to move in other manners. For example, the device support base of the transmitting end device may be configured as a slidable base, and a slide direction is variable. Movements of the clamp arms are replaced based on the slidable base such that the receiving end device can be controlled to horizontally move.

In some possible cases, in addition to controlling the receiving end device to horizontally move and the transmitting end coils to vertically move such that the alignment can be completed, the receiving end device may be vertically moved, and the transmitting end coil may be horizontally moved such that the alignment can be completed. For the process, reference can be made to the above descriptions, except that the movement direction is changed, which will not be repeated herein.

It should be understood that in FIG. 12 and related content thereof mentioned above, when the transmitting end coil is moved, regardless of the initial change state of the Q value when the transmitting end coil is moved, when the transmitting end coil is controlled to vertically move, the transmitting end coil may be moved in an opposite direction to target position 2 in a case that a second condition is satisfied. The second condition is that when the transmitting end coil is vertically moved, the Q value is required to continuously increase and then it is determined that the Q value continuously decreases R times. That is, the second condition may be understood as that the Q value continuously increases before the transmitting end coil is moved to target position 2, and continuously decreases M times after the transmitting end coil is moved to target position 2. Target position 2 may be referred to as a second position. When the Q value continuously increases and then continuously decreases R times, a movement direction of the transmitting end coil may be referred to as a second direction. For example, the second direction may be direction 3 involved in S202a and S203b mentioned above, and may be direction 4 involved in S202b-S204b mentioned above.

Based on the above descriptions, it should be understood that in some possible cases, the transmitting end device may move the receiving end device in the first direction, and the first parameter of the transmitting end device is determined at the first frequency when the receiving end device is moved. The receiving end device is moved to the first position. The first position is a position of the receiving end device when the transmitting end device determines a maximum first parameter when the receiving end device is moved. The transmitting end device moves the transmitting end coil in the second direction, and when the transmitting end coil is moved, the first parameter of the transmitting end device is determined at the second frequency. The transmitting end coil is moved to the second position. The second position is a position of the transmitting end coil when the transmitting end device determines a maximum first parameter when the transmitting end coil is moved. The first direction is perpendicular to the second direction. The movement in the first direction may be understood as a movement in a horizontal direction (which may be referred to as a horizontal movement), and may be understood as a movement in a vertical direction (which may be referred to as a vertical movement).

**An illustrative transmitting end device provided in embodiments of the disclosure will be introduced below.**

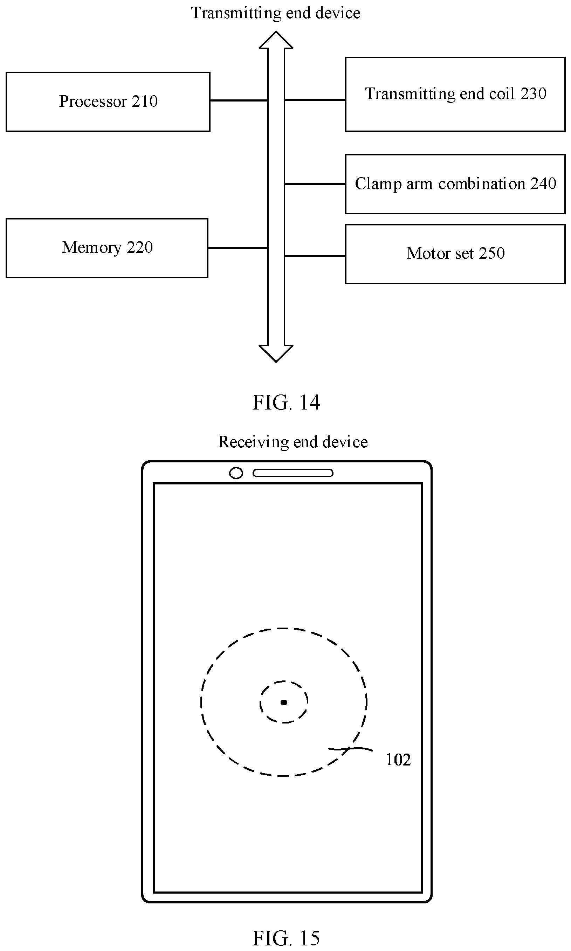

**FIG. 14** **is a schematic structural diagram of a transmitting end device according to an embodiment of the disclosure.**

It should be understood that the transmitting end device may have more or fewer components than those shown in FIG. 14, may combine two or more components, or may have different component configurations. The components shown in FIG. 14 may be implemented by hardware that includes one or more signal processors and/or application-specific integrated circuits, software, or combinations of hardware and software.

The transmitting end device may include: a processor 210, a memory 220, a transmitting end coil 230, a clamp arm combination 240 and a motor set 250.

The memory 220 is coupled to the processor 210, and may be configured to store computer program code. The computer program code includes computer instructions. The processor 210 may call the computer instructions to cause the transmitting end device to perform the device moving method involved in embodiments of the disclosure.

The transmitting end coil 230 may be configured to transmit energy such that charging by the receiving end coil can be implemented. The transmitting end coil can be vertically moved such that the receiving end device can be aligned with the transmitting end device in the vertical direction.

The clamp arm combination 240 may include two clamp arms. The two clamp arms may be configured to control the receiving end device to horizontally move. Therefore, the receiving end device can be horizontally aligned with the transmitting end device.

The motor set 250 may include motors corresponding to the two clamp arms and a motor corresponding to the transmitting end coil 230. The motors corresponding to the two clamp arms may control the clamp arms to move, and the motor corresponding to the transmitting end coil 230 may control the transmitting end coil 230 to move.

**An illustrative receiving end device provided in embodiments of the disclosure will be introduced below.**

**FIG. 15** **is a schematic structural diagram of a receiving end device according to an embodiment of the disclosure.**

The receiving end device in embodiments of the disclosure may be a terminal device equipped with Android, Huawei Harmony OS (Huawei Harmony OS), iOS, or another operating system. For example, in the example shown in FIG. 15, the receiving end device is a mobile phone.

The receiving end device may include a charging coil (that is, a receiving end coil, such as the coil 102). The receiving end coil may be configured to receive energy transmitted by the transmitting end coil and convert the energy into electric energy such that the receiving end device can be charged.

It can be understood that an example structure in embodiments of the disclosure does not constitute a specific limitation on the receiving end device. In some other embodiments of the disclosure, the receiving end device may include more or fewer components than those shown in the figure, or combine some components, or split some components, or have different component arrangements. The components shown in the figures may be implemented as hardware, software, or their combinations.

In embodiments of the disclosure, the receiving end device may further include a processor. The processor may call computer instructions stored in an internal memory to cause the receiving end device to perform the method involved in embodiments of the disclosure.

As used in the above embodiments, based on the context, the term "in a case of..." can be interpreted as a meaning of "if... ", "after... ", "in response to determining... ", or "in response to detecting...". Similarly, based on the context, the phrase "if determining..." or "if detecting... (a stated condition or event)" can be interpreted as a meaning of "if determining..." or "in response to determining... ", or "if detecting (a stated condition or event)" or "in response to detecting (a stated condition or event)".

All or some of the above embodiments may be implemented by using software, hardware, firmware, or their combinations. In a case that software is configured for implementation, implementation may be entirely or partially performed in a form of a computer program product. The computer program product includes one or more computer instructions. When the computer program instructions are loaded and executed on a computer, all or some of flows or functions according to embodiments of the disclosure are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired manner (for example, through a coaxial cable, an optical fiber, or a digital subscriber line) or a wireless manner (for example, through infrared rays, radio, or microwave). The computer-readable storage medium may be any available medium that can be accessed by the computer, or a data storage device, such as a server or a data center in which one or more usable media are integrated. The usable medium may be a magnetic medium (such as a soft disk, a hard disk, or a magnetic tape), an optical medium (such as a DVD), or a semiconductor medium (such as a solid state disk), etc.

Those of ordinary skill in the art can understand that all or some flows of the methods in the above embodiments may be implemented by using a computer program instructing related hardware. The program may be stored in a computer-readable storage medium. When this program is executed, flows of all above method embodiments can be included. The storage medium includes: any medium that can store program code, such as a ROM, a RAM, a magnetic disk, or an optical disc.

## Claims

1. A device moving method, applicable to a wireless charging system comprising a transmitting end device and a receiving end device, wherein the transmitting end device comprises a transmitting end coil (101), and the receiving end device comprises a receiving end coil (102); and when the wireless charging system operates, the method comprises:
moving, by the transmitting end device, the receiving end device in a first direction, and determining a first parameter at a first frequency when the receiving end device is moved; moving the receiving end device to a first position; wherein the first position is a position of the receiving end device in a case of a maximum first parameter when the receiving end device is moved;
moving, by the transmitting end device, the transmitting end coil (101) in a second direction perpendicular to the first direction, and determining the first parameter at a second frequency when the transmitting end coil (101) is moved; and moving the transmitting end coil (101) to a second position; wherein the second position is a position of the transmitting end coil (101) in a case of the maximum first parameter when the transmitting end coil (101) is moved, further comprising:
stopping, by the transmitting end device in a case that a first condition is satisfied when the transmitting end device moves the receiving end device in the first direction, moving the receiving end device in the first direction, and moving the receiving end device in an opposite direction of the first direction to the first position; wherein
the first condition comprises: when the transmitting end device moves the receiving end device, a measured first parameter continuously increases when the receiving end device is moved in the first direction to the first position, and continuously decreases R times when the receiving end device continues being moved in the first direction after passing the first position; wherein R is an integer greater than or equal to 1; and
stopping, by the transmitting end device in a case that a second condition is satisfied when the transmitting end device moves the transmitting end coil (101) in the second direction, moving the transmitting end coil (101) in the second direction, and moving the transmitting end coil (101) in an opposite direction of the second direction to the second position; wherein
the second condition comprises: when the transmitting end device moves the transmitting end coil (101), a measured first parameter continuously increases when the transmitting end coil (101) is moved in the second direction to the second position, and continuously decreases M times when the transmitting end coil (101) continues being moved in the second direction after passing the second position; wherein M is an integer greater than or equal to 1, wherein the transmitting end device further comprises a first clamp arm (203a) and a second clamp arm (203b); the first frequency means that the transmitting end device determines the first parameter once every first time, and the first time is time during which the transmitting end device moves the first clamp arm and second clamp arm clamp arm E times; the moving the receiving end device in a first direction specifically comprises:
pushing, by the transmitting end device by means of the first clamp arm (203a), the receiving end device to move in the first direction; and
controlling, by the transmitting end device in a case that a first condition is satisfied when the receiving end device is moved, the receiving end device to move in an opposite direction of the first direction to the first position specifically comprises:
causing, by the transmitting end device in a case that the first condition is satisfied when the transmitting end device moves the receiving end device based on the first clamp arm (203a), the two clamp arms to clamp the receiving end device; wherein the two clamp arms comprise the first clamp arm (203a) and the second clamp arm (203b); and
pushing, by the transmitting end device based on the second clamp arm (203b), the receiving end device to move in the opposite direction of the first direction E × R times to the first position, wherein the transmitting end device further comprises a first motor corresponding to the first clamp arm (203a) and a second motor corresponding to the second clamp arm (203b), the first clamp arm (203a) moves once every time the first motor (203a)rotates, and the second clamp arm (203b) moves once every time the second motor (203b) rotates; and in a case that the first condition is satisfied when the transmitting end device moves the receiving end device based on the first clamp arm (203a), the method further comprises:
determining, by the transmitting end device in a case that the transmitting end device determines that the first and second motors stall, that the two clamp arms clamp the receiving end device; and
controlling, in a case that the transmitting end device determines that the motors corresponding to the two clamp arms do not stall, a motor having a larger current of the first and second motors corresponding to the two clamp arms to stop rotating, and a motor having a smaller current to continue rotating, causing the clamp arm corresponding to the motor having the smaller current to make contact with the receiving end device, and causing the two clamp arms to clamp the receiving end device.

2. The method according to claim 1, further comprising:
charging, by the transmitting end device, the receiving end device with first power before the moving, by the transmitting end device, the receiving end device in a first direction; and
charging, by the transmitting end device, the receiving end device with second power after the moving, by the transmitting end device, the transmitting end coil (101) to a second position; wherein
the second power is greater than the first power.

3. The method according to claim 1 or 2, wherein before the moving, by the transmitting end device, the receiving end device in a first direction, the method further comprises:
determining, in a case that the measured first parameter continuously decreases R times when the transmitting end device moves the receiving end device in the opposite direction of the first direction, that the transmitting end device moves the receiving end device in the first direction.

4. The method according to any one of claims 1 to 3, wherein before the moving the receiving end device in a first direction, the method further comprises:
moving, by the transmitting end device, the two clamp arms to the transmitting end coil (101) at a first rate, and determining the first parameter at the first frequency; and
moving, in a case that the transmitting end device determines that the first parameter is continuously the same T times when the two clamp arms are moved, the two clamp arms to the transmitting end coil (101) at a second rate, and determining the first parameter at a third frequency; wherein the third frequency is less than the first rate; the second frequency is less than the third frequency; and T is an integer greater than or equal to 1.

5. The method according to claim 4, wherein before the moving the receiving end device in a first direction, the method further comprises:
determining, in cases that the transmitting end device determines that at least one of the two clamp arms makes contact with the receiving end device, and the measured first parameter is continuously the same U times, to move the receiving end device in the first direction; wherein U is an integer greater than or equal to 1.

6. The method according to any of claims 1 to 5, wherein the pushing, by the transmitting end device based on the second clamp arm (203b), the receiving end device to move in the opposite direction of the first direction E × R times to the first position specifically comprises:
rotating, in a case that the two clamp arms clamp the receiving end device, a motor having a larger initial current of the motors corresponding to the two clamp arms in an opposite direction E × R times, rotating, by the transmitting end device, a motor having a smaller initial current of the motors corresponding to the two clamp arms E × R times, and causing a clamp arm corresponding to the motor having the smaller initial current to push the receiving end device to move in the opposite direction of the first direction E × R times to the first position; the initial current of the motor comprises a current of the motor acquired in a case that the first condition is satisfied when the receiving end device is moved; the clamp arm corresponding to the motor having the smaller initial current is the second clamp arm (203b); and the clamp arm corresponding to the motor having the larger initial current is the first clamp arm (203a).

7. The method according to any one of claims 1-6, wherein before the moving the transmitting end coil (101) in a second direction, the method further comprises:
determining, in a case that the measured first parameter continuously decreases M times when the transmitting end device moves the transmitting end coil (101) in the opposite direction of the second direction, that the transmitting end device moves the transmitting end coil (101) in the second direction.

8. The method according to claim 7, wherein the transmitting end device further comprises a motor corresponding to the transmitting end coil (101), and the transmitting end coil (101) is moved once every time the motor corresponding to the transmitting end coil (101) rotates; the second frequency means that the first parameter is determined once every second time, and the second time is time during which the transmitting end device moves the transmitting end coil (101) G times; and controlling, by the transmitting end device, the transmitting end coil (101) to move in an opposite direction of the second direction to the second position comprises:
rotating, by the transmitting end device, the motor corresponding to the transmitting end coil (101) in an opposite direction G × M times, and controlling the transmitting end coil (101) to move in the opposite direction of the second direction to the second position.

9. The method according to any one of claims 1-8, wherein the first parameter is quality factor Q, and is used to measure charging efficiency of the transmitting end device, and the higher the charging efficiency, the greater the first parameter.

10. A transmitting end device, comprising: two clamp arms and a transmitting end coil (101), wherein
the two clamp arms are telescopically movable in a first direction;
in a case that a first condition is satisfied when the transmitting end device moves the receiving end device in the first direction by means of the two clamp arms, the transmitting end device is configured to stop moving the receiving end device in the first direction, and the receiving end device is moved in an opposite direction of the first direction to the first position;
the first condition comprises: when the transmitting end device moves the receiving end device, a measured first parameter continuously increases when the receiving end device is moved in the first direction to the first position, and continuously decreases R times when the receiving end device continues being moved in the first direction after passing the first position; wherein R is an integer greater than or equal to 1;
the transmitting end coil is movable in a second direction perpendicular to the first direction;
in a case that a second condition is satisfied when the transmitting end device moves the transmitting end coil (101) in the second direction, the transmitting end device is configured to stop moving the transmitting end coil (101) in the second direction, and the transmitting end coil (101) is moved in an opposite direction of the second direction to the second position;
the second condition comprises: when the transmitting end device moves the transmitting end coil (101), a measured first parameter continuously increases when the transmitting end coil (101) is moved in the second direction to the second position, and continuously decreases M times when the transmitting end coil (101) continues being moved in the second direction after passing the second position; wherein M is an integer greater than or equal to 1; wherein the transmitting end device is configured, when the wireless charging system operates, to move the receiving end device in the first direction and determine the first parameter at a first frequency when the receiving end device is moved, and to move the receiving end device to the first position, wherein the first position is a position of the receiving end device in a case of a maximum first parameter when the receiving end device is moved; and to move the transmitting end coil (101) in the second direction and determine the first parameter at a second frequency when the transmitting end coil (101) is moved, and to move the transmitting end coil (101) to the second position, wherein the second position is a position of the transmitting end coil (101) in a case of the maximum first parameter when the transmitting end coil (101) is moved;
wherein the two clamp arms comprise a first clamp arm (203a) and a second clamp arm (203b); the first frequency means that the transmitting end device determines the first parameter once every first time, and the first time is time during which the transmitting end device moves the first clamp arm and second clamp arm
E times; moving the receiving end device in the first direction comprises pushing, by the transmitting end device by means of the first clamp arm (203a), the receiving end device to move in the first direction; and moving the receiving end device in the opposite direction of the first direction to the first position comprises, in a case that the first condition is satisfied, causing, by the transmitting end device, the two clamp arms to clamp the receiving end device, and pushing, by the transmitting end device based on the second clamp arm (203b), the receiving end device to move in the opposite direction of the first direction E × R times to the first position;
wherein the transmitting end device further comprises a first motor corresponding to the first clamp arm (203a) and a second motor corresponding to the second clamp arm (203b), the first clamp arm (203a) moves once every time the first motor rotates, and the second clamp arm (203b) moves once every time the second motor rotates; and in a case that the first condition is satisfied when the transmitting end device moves the receiving end device based on the first clamp arm (203a), the transmitting end device is configured to determine, in a case that the motors corresponding to the two clamp arms stall, that the two clamp arms clamp the receiving end device; and to control, in a case that the motors corresponding to the two clamp arms do not stall, a motor having a larger current of the motors corresponding to the two clamp arms to stop rotating, and a motor having a smaller current to continue rotating, causing the clamp arm corresponding to the motor having the smaller current to make contact with the receiving end device, and causing the two clamp arms to clamp the receiving end device.

11. A computer storage medium, storing a computer program, wherein the computer program comprises executable instructions, and when executed by a processor, the executable instructions cause the processor to perform the method according to any one of claims 1-9.

## Patentansprüche

1. Vorrichtungsbewegungsverfahren, anwendbar auf ein drahtloses Ladesystem, das eine sendeseitige Vorrichtung und eine empfangsseitige Vorrichtung umfasst, wobei die sendeseitige Vorrichtung eine sendeseitige Spule (101) umfasst und die empfangsseitige Vorrichtung eine empfangsseitige Spule (102) umfasst; und wenn das drahtlose Ladesystem arbeitet, das Verfahren umfasst:
Bewegen, durch die sendeseitige Vorrichtung, der empfangsseitigen Vorrichtung in einer ersten Richtung und Bestimmen eines ersten Parameters mit einer ersten Frequenz, wenn die empfangsseitige Vorrichtung bewegt wird; Bewegen der empfangsseitigen Vorrichtung zu einer ersten Position; wobei die erste Position eine Position der empfangsseitigen Vorrichtung in einem Fall eines maximalen ersten Parameters ist, wenn die empfangsseitige Vorrichtung bewegt wird;
Bewegen, durch die sendeseitige Vorrichtung, der sendeseitigen Spule (101) in einer zweiten Richtung senkrecht zu der ersten Richtung und Bestimmen des ersten Parameters mit einer zweiten Frequenz, wenn die sendeseitige Spule (101) bewegt wird; und Bewegen der sendeseitigen Spule (101) zu einer zweiten Position; wobei die zweite Position eine Position der sendeseitigen Spule (101) in einem Fall des maximalen ersten Parameters ist, wenn die sendeseitige Spule (101) bewegt wird, ferner umfassend:
Anhalten, durch die sendeseitige Vorrichtung in einem Fall, dass eine erste Bedingung erfüllt ist, wenn die sendeseitige Vorrichtung die empfangsseitige Vorrichtung in der ersten Richtung bewegt, des Bewegens der empfangsseitigen Vorrichtung in der ersten Richtung, und Bewegen der empfangsseitigen Vorrichtung in einer entgegengesetzten Richtung zu der ersten Richtung zu der ersten Position; wobei
die erste Bedingung umfasst: wenn die sendeseitige Vorrichtung die empfangsseitige Vorrichtung bewegt, ein gemessener erster Parameter kontinuierlich ansteigt, wenn die empfangsseitige Vorrichtung in der ersten Richtung zu der ersten Position bewegt wird, und kontinuierlich R-mal abnimmt, wenn die empfangsseitige Vorrichtung nach dem Passieren der ersten Position weiterhin in der ersten Richtung bewegt wird; wobei R eine ganze Zahl größer als oder gleich 1 ist; und
Anhalten, durch die sendeseitige Vorrichtung in einem Fall, dass eine zweite Bedingung erfüllt ist, wenn die sendeseitige Vorrichtung die sendeseitige Spule (101) in der zweiten Richtung bewegt, des Bewegens der sendeseitigen Spule (101) in der zweiten Richtung, und Bewegen der sendeseitigen Spule (101) in einer entgegengesetzten Richtung zu der zweiten Richtung zu der zweiten Position; wobei
die zweite Bedingung umfasst: wenn die sendeseitige Vorrichtung die sendeseitige Spule (101) bewegt, ein gemessener erster Parameter kontinuierlich ansteigt, wenn die sendeseitige Spule (101) in der zweiten Richtung zu der zweiten Position bewegt wird, und kontinuierlich M-mal abnimmt, wenn die sendeseitige Spule (101) nach dem Passieren der zweiten Position weiterhin in der zweiten Richtung bewegt wird; wobei M eine ganze Zahl größer als oder gleich 1 ist, wobei die sendeseitige Vorrichtung ferner einen ersten Klemmarm (203a) und einen zweiten Klemmarm (203b) umfasst; die erste Frequenz bedeutet, dass die sendeseitige Vorrichtung den ersten Parameter einmal pro erste Zeit bestimmt, und die erste Zeit eine Zeit ist, während der die sendeseitige Vorrichtung den ersten Klemmarm und den zweiten Klemmarm E-mal bewegt; wobei das Bewegen der empfangsseitigen Vorrichtung in einer ersten Richtung spezifisch umfasst:
Schieben, durch die sendeseitige Vorrichtung mittels des ersten Klemmarms (203a), der empfangsseitigen Vorrichtung zur Bewegung in der ersten Richtung; und
Das Steuern, durch die sendeseitige Vorrichtung in einem Fall, dass eine erste Bedingung erfüllt ist, wenn die empfangsseitige Vorrichtung bewegt wird, der empfangsseitigen Vorrichtung zur Bewegung in einer entgegengesetzten Richtung zu der ersten Richtung zu der ersten Position spezifisch umfasst:
Veranlassen, durch die sendeseitige Vorrichtung in einem Fall, dass die erste Bedingung erfüllt ist, wenn die sendeseitige Vorrichtung die empfangsseitige Vorrichtung basierend auf dem ersten Klemmarm (203a) bewegt, dass die zwei Klemmarme die empfangsseitige Vorrichtung festklemmen; wobei die zwei Klemmarme den ersten Klemmarm (203a) und den zweiten Klemmarm (203b) umfassen; und
Schieben, durch die sendeseitige Vorrichtung basierend auf dem zweiten Klemmarm (203b), der empfangsseitigen Vorrichtung zur Bewegung in der entgegengesetzten Richtung zu der ersten Richtung E × R-mal zu der ersten Position, wobei die sendeseitige Vorrichtung ferner einen ersten Motor entsprechend dem ersten Klemmarm (203a) und einen zweiten Motor entsprechend dem zweiten Klemmarm (203b) umfasst, der erste Klemmarm (203a) sich jedes Mal einmal bewegt, wenn der erste Motor (203a) rotiert, und der zweite Klemmarm (203b) sich jedes Mal einmal bewegt, wenn der zweite Motor (203b) rotiert; und in einem Fall, dass die erste Bedingung erfüllt ist, wenn die sendeseitige Vorrichtung die empfangsseitige Vorrichtung basierend auf dem ersten Klemmarm (203a) bewegt, das Verfahren ferner umfasst:
Bestimmen, durch die sendeseitige Vorrichtung in einem Fall, dass die sendeseitige Vorrichtung bestimmt, dass der erste und der zweite Motor blockieren, dass die zwei Klemmarme die empfangsseitige Vorrichtung festklemmen; und
Steuern, in einem Fall, dass die sendeseitige Vorrichtung bestimmt, dass die den zwei Klemmarmen entsprechenden Motoren nicht blockieren, eines Motors mit einem größeren Strom von dem ersten und dem zweiten Motor, die den zwei Klemmarmen entsprechen, so dass er aufhört zu rotieren, und eines Motors mit einem kleineren Strom, so dass er weiterhin rotiert, um zu veranlassen, dass der dem Motor mit dem kleineren Strom entsprechende Klemmarm mit der empfangsseitigen Vorrichtung in Kontakt kommt, und zu veranlassen, dass die zwei Klemmarme die empfangsseitige Vorrichtung festklemmen.

2. Verfahren nach Anspruch 1, ferner umfassend:
Laden, durch die sendeseitige Vorrichtung, der empfangsseitigen Vorrichtung mit einer ersten Leistung vor dem Bewegen, durch die sendeseitige Vorrichtung, der empfangsseitigen Vorrichtung in einer ersten Richtung; und
Laden, durch die sendeseitige Vorrichtung, der empfangsseitigen Vorrichtung mit einer zweiten Leistung nach dem Bewegen, durch die sendeseitige Vorrichtung, der sendeseitigen Spule (101) zu einer zweiten Position; wobei
die zweite Leistung größer als die erste Leistung ist.

3. Verfahren nach Anspruch 1 oder 2, wobei vor dem Bewegen, durch die sendeseitige Vorrichtung, der empfangsseitigen Vorrichtung in einer ersten Richtung das Verfahren ferner umfasst:
Bestimmen, in einem Fall, dass der gemessene erste Parameter kontinuierlich R-mal abnimmt, wenn die sendeseitige Vorrichtung die empfangsseitige Vorrichtung in der entgegengesetzten Richtung zu der ersten Richtung bewegt, dass die sendeseitige Vorrichtung die empfangsseitige Vorrichtung in der ersten Richtung bewegt.

4. Verfahren nach einem der Ansprüche 1 bis 3, wobei vor dem Bewegen der empfangsseitigen Vorrichtung in einer ersten Richtung das Verfahren ferner umfasst:
Bewegen, durch die sendeseitige Vorrichtung, der zwei Klemmarme zu der sendeseitigen Spule (101) mit einer ersten Rate und Bestimmen des ersten Parameters mit der ersten Frequenz; und
Bewegen, in einem Fall, dass die sendeseitige Vorrichtung bestimmt, dass der erste Parameter kontinuierlich T-mal gleich ist, wenn die zwei Klemmarme bewegt werden, der zwei Klemmarme zu der sendeseitigen Spule (101) mit einer zweiten Rate und Bestimmen des ersten Parameters mit einer dritten Frequenz; wobei die dritte Frequenz kleiner als die erste Rate ist; die zweite Frequenz kleiner als die dritte Frequenz ist; und T eine ganze Zahl größer als oder gleich 1 ist.

5. Verfahren nach Anspruch 4, wobei vor dem Bewegen der empfangsseitigen Vorrichtung in einer ersten Richtung das Verfahren ferner umfasst:
Bestimmen, in Fällen, dass die sendeseitige Vorrichtung bestimmt, dass mindestens einer der zwei Klemmarme mit der empfangsseitigen Vorrichtung in Kontakt kommt, und der gemessene erste Parameter kontinuierlich U-mal gleich ist, die empfangsseitige Vorrichtung in der ersten Richtung zu bewegen; wobei U eine ganze Zahl größer als oder gleich 1 ist.

6. Verfahren nach einem der Ansprüche 1 bis 5, wobei das Schieben, durch die sendeseitige Vorrichtung basierend auf dem zweiten Klemmarm (203b), der empfangsseitigen Vorrichtung zur Bewegung in der entgegengesetzten Richtung zu der ersten Richtung E × R-mal zu der ersten Position spezifisch umfasst:
Rotieren, in einem Fall, dass die zwei Klemmarme die empfangsseitige Vorrichtung festklemmen, eines Motors mit einem größeren Anfangsstrom von den den zwei Klemmarmen entsprechenden Motoren in einer entgegengesetzten Richtung E × R-mal, Rotieren, durch die sendeseitige Vorrichtung, eines Motors mit einem kleineren Anfangsstrom von den den zwei Klemmarmen entsprechenden Motoren E × R-mal, und Veranlassen, dass ein dem Motor mit dem kleineren Anfangsstrom entsprechender Klemmarm die empfangsseitige Vorrichtung schiebt, so dass sie sich in der entgegengesetzten Richtung zu der ersten Richtung E × R-mal zu der ersten Position bewegt; wobei der Anfangsstrom des Motors einen Strom des Motors umfasst, der in einem Fall erfasst wird, dass die erste Bedingung erfüllt ist, wenn die empfangsseitige Vorrichtung bewegt wird; der dem Motor mit dem kleineren Anfangsstrom entsprechende Klemmarm der zweite Klemmarm (203b) ist; und der dem Motor mit dem größeren Anfangsstrom entsprechende Klemmarm der erste Klemmarm (203a) ist.

7. Verfahren nach einem der Ansprüche 1 bis 6, wobei vor dem Bewegen der sendeseitigen Spule (101) in einer zweiten Richtung das Verfahren ferner umfasst:
Bestimmen, in einem Fall, dass der gemessene erste Parameter kontinuierlich M-mal abnimmt, wenn die sendeseitige Vorrichtung die sendeseitige Spule (101) in der entgegengesetzten Richtung zu der zweiten Richtung bewegt, dass die sendeseitige Vorrichtung die sendeseitige Spule (101) in der zweiten Richtung bewegt.

8. Verfahren nach Anspruch 7, wobei die sendeseitige Vorrichtung ferner einen der sendeseitigen Spule (101) entsprechenden Motor umfasst, und die sendeseitige Spule (101) jedes Mal einmal bewegt wird, wenn der der sendeseitigen Spule (101) entsprechende Motor rotiert; die zweite Frequenz bedeutet, dass der erste Parameter einmal pro zweite Zeit bestimmt wird, und die zweite Zeit eine Zeit ist, während der die sendeseitige Vorrichtung die sendeseitige Spule (101) G-mal bewegt; und das Steuern, durch die sendeseitige Vorrichtung, der sendeseitigen Spule (101), so dass sie sich in einer entgegengesetzten Richtung zu der zweiten Richtung zu der zweiten Position bewegt, umfasst:
Rotieren, durch die sendeseitige Vorrichtung, des der sendeseitigen Spule (101) entsprechenden Motors in einer entgegengesetzten Richtung G × M-mal und Steuern der sendeseitigen Spule (101), so dass sie sich in der entgegengesetzten Richtung zu der zweiten Richtung zu der zweiten Position bewegt.

9. Verfahren nach einem der Ansprüche 1 bis 8, wobei der erste Parameter ein Gütefaktor Q ist und verwendet wird, um eine Ladeeffizienz der sendeseitigen Vorrichtung zu messen, und je höher die Ladeeffizienz ist, desto größer der erste Parameter ist.

10. Sendeseitige Vorrichtung, umfassend: zwei Klemmarme und eine sendeseitige Spule (101), wobei
die zwei Klemmarme in einer ersten Richtung teleskopisch bewegbar sind;
in einem Fall, dass eine erste Bedingung erfüllt ist, wenn die sendeseitige Vorrichtung die empfangsseitige Vorrichtung mittels der zwei Klemmarme in der ersten Richtung bewegt, die sendeseitige Vorrichtung dazu konfiguriert ist, das Bewegen der empfangsseitigen Vorrichtung in der ersten Richtung anzuhalten, und die empfangsseitige Vorrichtung in einer entgegengesetzten Richtung zu der ersten Richtung zu der ersten Position bewegt wird;
die erste Bedingung umfasst: wenn die sendeseitige Vorrichtung die empfangsseitige Vorrichtung bewegt, ein gemessener erster Parameter kontinuierlich ansteigt, wenn die empfangsseitige Vorrichtung in der ersten Richtung zu der ersten Position bewegt wird, und kontinuierlich R-mal abnimmt, wenn die empfangsseitige Vorrichtung nach dem Passieren der ersten Position weiterhin in der ersten Richtung bewegt wird; wobei R eine ganze Zahl größer als oder gleich 1 ist;
die sendeseitige Spule in einer zweiten Richtung senkrecht zu der ersten Richtung bewegbar ist;
in einem Fall, dass eine zweite Bedingung erfüllt ist, wenn die sendeseitige Vorrichtung die sendeseitige Spule (101) in der zweiten Richtung bewegt, die sendeseitige Vorrichtung dazu konfiguriert ist, das Bewegen der sendeseitigen Spule (101) in der zweiten Richtung anzuhalten, und die sendeseitige Spule (101) in einer entgegengesetzten Richtung zu der zweiten Richtung zu der zweiten Position bewegt wird;
die zweite Bedingung umfasst: wenn die sendeseitige Vorrichtung die sendeseitige Spule (101) bewegt, ein gemessener erster Parameter kontinuierlich ansteigt, wenn die sendeseitige Spule (101) in der zweiten Richtung zu der zweiten Position bewegt wird, und kontinuierlich M-mal abnimmt, wenn die sendeseitige Spule (101) nach dem Passieren der zweiten Position weiterhin in der zweiten Richtung bewegt wird; wobei M eine ganze Zahl größer als oder gleich 1 ist; wobei die sendeseitige Vorrichtung dazu konfiguriert ist, wenn das drahtlose Ladesystem arbeitet, die empfangsseitige Vorrichtung in der ersten Richtung zu bewegen und den ersten Parameter mit einer ersten Frequenz zu bestimmen, wenn die empfangsseitige Vorrichtung bewegt wird, und die empfangsseitige Vorrichtung zu der ersten Position zu bewegen, wobei die erste Position eine Position der empfangsseitigen Vorrichtung in einem Fall eines maximalen ersten Parameters ist, wenn die empfangsseitige Vorrichtung bewegt wird; und die sendeseitige Spule (101) in der zweiten Richtung zu bewegen und den ersten Parameter mit einer zweiten Frequenz zu bestimmen, wenn die sendeseitige Spule (101) bewegt wird, und die sendeseitige Spule (101) zu der zweiten Position zu bewegen, wobei die zweite Position eine Position der sendeseitigen Spule (101) in einem Fall des maximalen ersten Parameters ist, wenn die sendeseitige Spule (101) bewegt wird;
wobei die zwei Klemmarme einen ersten Klemmarm (203a) und einen zweiten Klemmarm (203b) umfassen; die erste Frequenz bedeutet, dass die sendeseitige Vorrichtung den ersten Parameter einmal pro erste Zeit bestimmt, und die erste Zeit eine Zeit ist, während der die sendeseitige Vorrichtung den ersten Klemmarm und den zweiten Klemmarm E-mal bewegt; das Bewegen der empfangsseitigen Vorrichtung in der ersten Richtung das Schieben, durch die sendeseitige Vorrichtung mittels des ersten Klemmarms (203a), der empfangsseitigen Vorrichtung zur Bewegung in der ersten Richtung umfasst; und das Bewegen der empfangsseitigen Vorrichtung in der entgegengesetzten Richtung zu der ersten Richtung zu der ersten Position, in einem Fall, dass die erste Bedingung erfüllt ist, das Veranlassen, durch die sendeseitige Vorrichtung, dass die zwei Klemmarme die empfangsseitige Vorrichtung festklemmen, und das Schieben, durch die sendeseitige Vorrichtung basierend auf dem zweiten Klemmarm (203b), der empfangsseitigen Vorrichtung, so dass sie sich in der entgegengesetzten Richtung zu der ersten Richtung E × R-mal zu der ersten Position bewegt, umfasst;
wobei die sendeseitige Vorrichtung ferner einen ersten Motor entsprechend dem ersten Klemmarm (203a) und einen zweiten Motor entsprechend dem zweiten Klemmarm (203b) umfasst, der erste Klemmarm (203a) sich jedes Mal einmal bewegt, wenn der erste Motor rotiert, und der zweite Klemmarm (203b) sich jedes Mal einmal bewegt, wenn der zweite Motor rotiert; und in einem Fall, dass die erste Bedingung erfüllt ist, wenn die sendeseitige Vorrichtung die empfangsseitige Vorrichtung basierend auf dem ersten Klemmarm (203a) bewegt, die sendeseitige Vorrichtung dazu konfiguriert ist, in einem Fall, dass die den zwei Klemmarmen entsprechenden Motoren blockieren, zu bestimmen, dass die zwei Klemmarme die empfangsseitige Vorrichtung festklemmen; und in einem Fall, dass die den zwei Klemmarmen entsprechenden Motoren nicht blockieren, einen Motor mit einem größeren Strom von den den zwei Klemmarmen entsprechenden Motoren so zu steuern, dass er aufhört zu rotieren, und einen Motor mit einem kleineren Strom so zu steuern, dass er weiterhin rotiert, Veranlassen, dass der dem Motor mit dem kleineren Strom entsprechende Klemmarm mit der empfangsseitigen Vorrichtung in Kontakt kommt, und Veranlassen, dass die zwei Klemmarme die empfangsseitige Vorrichtung festklemmen.

11. Computerspeichermedium, das ein Computerprogramm speichert, wobei das Computerprogramm ausführbare Anweisungen umfasst, und wenn sie von einem Prozessor ausgeführt werden, die ausführbaren Anweisungen den Prozessor dazu veranlassen, das Verfahren nach einem der Ansprüche 1 bis 9 durchzuführen.

## Revendications

1. Procédé de déplacement de dispositif, applicable à un système de charge sans fil comprenant un dispositif côté émission et un dispositif côté réception, dans lequel le dispositif côté émission comprend une bobine côté émission (101), et le dispositif côté réception comprend une bobine côté réception (102) ; et lorsque le système de charge sans fil fonctionne, le procédé comprend :
le déplacement, par le dispositif côté émission, du dispositif côté réception dans une première direction, et la détermination d'un premier paramètre à une première fréquence lorsque le dispositif côté réception est déplacé ; le déplacement du dispositif côté réception jusqu'à une première position ; dans lequel la première position est une position du dispositif côté réception dans un cas d'un premier paramètre maximal lorsque le dispositif côté réception est déplacé ;
le déplacement, par le dispositif côté émission, de la bobine côté émission (101) dans une deuxième direction perpendiculaire à la première direction, et la détermination du premier paramètre à une deuxième fréquence lorsque la bobine côté émission (101) est déplacée ; et le déplacement de la bobine côté émission (101) jusqu'à une deuxième position ; dans lequel la deuxième position est une position de la bobine côté émission (101) dans un cas du premier paramètre maximal lorsque la bobine côté émission (101) est déplacée, comprenant en outre :
l'arrêt, par le dispositif côté émission dans un cas où une première condition est satisfaite lorsque le dispositif côté émission déplace le dispositif côté réception dans la première direction, du déplacement du dispositif côté réception dans la première direction, et le déplacement du dispositif côté réception dans une direction opposée à la première direction jusqu'à la première position ; dans lequel
la première condition comprend : lorsque le dispositif côté émission déplace le dispositif côté réception, un premier paramètre mesuré augmente continuellement lorsque le dispositif côté réception est déplacé dans la première direction jusqu'à la première position, et diminue continuellement R fois lorsque le dispositif côté réception continue d'être déplacé dans la première direction après avoir dépassé la première position ; dans lequel R est un nombre entier supérieur ou égal à 1 ; et
l'arrêt, par le dispositif côté émission dans un cas où une deuxième condition est satisfaite lorsque le dispositif côté émission déplace la bobine côté émission (101) dans la deuxième direction, du déplacement de la bobine côté émission (101) dans la deuxième direction, et le déplacement de la bobine côté émission (101) dans une direction opposée à la deuxième direction jusqu'à la deuxième position ; dans lequel
la deuxième condition comprend : lorsque le dispositif côté émission déplace la bobine côté émission (101), un premier paramètre mesuré augmente continuellement lorsque la bobine côté émission (101) est déplacée dans la deuxième direction jusqu'à la deuxième position, et diminue continuellement M fois lorsque la bobine côté émission (101) continue d'être déplacée dans la deuxième direction après avoir dépassé la deuxième position ; dans lequel M est un nombre entier supérieur ou égal à 1, dans lequel le dispositif côté émission comprend en outre un premier bras de serrage (203a) et un deuxième bras de serrage (203b) ; la première fréquence signifie que le dispositif côté émission détermine le premier paramètre une fois toutes les premières durées, et la première durée est une durée pendant laquelle le dispositif côté émission déplace le premier bras de serrage et le deuxième bras de serrage E fois ; le déplacement du dispositif côté réception dans une première direction comprend spécifiquement :
la poussée, par le dispositif côté émission au moyen du premier bras de serrage (203a), du dispositif côté réception pour qu'il se déplace dans la première direction ; et
la commande, par le dispositif côté émission dans un cas où une première condition est satisfaite lorsque le dispositif côté réception est déplacé, du dispositif côté réception pour qu'il se déplace dans une direction opposée à la première direction jusqu'à la première position comprend spécifiquement :
le fait d'amener, par le dispositif côté émission dans un cas où la première condition est satisfaite lorsque le dispositif côté émission déplace le dispositif côté réception sur la base du premier bras de serrage (203a), les deux bras de serrage à serrer le dispositif côté réception ; dans lequel les deux bras de serrage comprennent le premier bras de serrage (203a) et le deuxième bras de serrage (203b) ; et
la poussée, par le dispositif côté émission sur la base du deuxième bras de serrage (203b), du dispositif côté réception pour qu'il se déplace dans la direction opposée à la première direction E × R fois jusqu'à la première position, dans lequel le dispositif côté émission comprend en outre un premier moteur correspondant au premier bras de serrage (203a) et un deuxième moteur correspondant au deuxième bras de serrage (203b), le premier bras de serrage (203a) se déplace une fois chaque fois que le premier moteur (203a) tourne, et le deuxième bras de serrage (203b) se déplace une fois chaque fois que le deuxième moteur (203b) tourne ; et dans un cas où la première condition est satisfaite lorsque le dispositif côté émission déplace le dispositif côté réception sur la base du premier bras de serrage (203a), le procédé comprend en outre :
la détermination, par le dispositif côté émission dans un cas où le dispositif côté émission détermine que les premier et deuxième moteurs calent, du fait que les deux bras de serrage serrent le dispositif côté réception ; et
la commande, dans un cas où le dispositif côté émission détermine que les moteurs correspondant aux deux bras de serrage ne calent pas, d'un moteur ayant un courant plus important parmi les premier et deuxième moteurs correspondant aux deux bras de serrage pour qu'il s'arrête de tourner, et d'un moteur ayant un courant plus faible pour qu'il continue de tourner, pour amener le bras de serrage correspondant au moteur ayant le courant plus faible à entrer en contact avec le dispositif côté réception, et amener les deux bras de serrage à serrer le dispositif côté réception.

2. Procédé selon la revendication 1, comprenant en outre :
la charge, par le dispositif côté émission, du dispositif côté réception avec une première puissance avant le déplacement, par le dispositif côté émission, du dispositif côté réception dans une première direction ; et
la charge, par le dispositif côté émission, du dispositif côté réception avec une deuxième puissance après le déplacement, par le dispositif côté émission, de la bobine côté émission (101) jusqu'à une deuxième position ; dans lequel
la deuxième puissance est supérieure à la première puissance.

3. Procédé selon la revendication 1 ou 2, dans lequel avant le déplacement, par le dispositif côté émission, du dispositif côté réception dans une première direction, le procédé comprend en outre :
la détermination, dans un cas où le premier paramètre mesuré diminue continuellement R fois lorsque le dispositif côté émission déplace le dispositif côté réception dans la direction opposée à la première direction, du fait que le dispositif côté émission déplace le dispositif côté réception dans la première direction.

4. Procédé selon l'une quelconque des revendications 1 à 3, dans lequel avant le déplacement du dispositif côté réception dans une première direction, le procédé comprend en outre :
le déplacement, par le dispositif côté émission, des deux bras de serrage vers la bobine côté émission (101) à une première vitesse, et la détermination du premier paramètre à la première fréquence ; et
le déplacement, dans un cas où le dispositif côté émission détermine que le premier paramètre est continuellement le même T fois lorsque les deux bras de serrage sont déplacés, des deux bras de serrage vers la bobine côté émission (101) à une deuxième vitesse, et la détermination du premier paramètre à une troisième fréquence ; dans lequel la troisième fréquence est inférieure à la première vitesse ; la deuxième fréquence est inférieure à la troisième fréquence ; et T est un nombre entier supérieur ou égal à 1.

5. Procédé selon la revendication 4, dans lequel avant le déplacement du dispositif côté réception dans une première direction, le procédé comprend en outre :
la détermination, dans des cas où le dispositif côté émission détermine qu'au moins l'un des deux bras de serrage entre en contact avec le dispositif côté réception, et que le premier paramètre mesuré est continuellement le même U fois, du fait de déplacer le dispositif côté réception dans la première direction ; dans lequel U est un nombre entier supérieur ou égal à 1.

6. Procédé selon l'une quelconque des revendications 1 à 5, dans lequel la poussée, par le dispositif côté émission sur la base du deuxième bras de serrage (203b), du dispositif côté réception pour qu'il se déplace dans la direction opposée à la première direction E × R fois jusqu'à la première position comprend spécifiquement :
la rotation, dans un cas où les deux bras de serrage serrent le dispositif côté réception, d'un moteur ayant un courant initial plus important parmi les moteurs correspondant aux deux bras de serrage dans une direction opposée E × R fois, la rotation, par le dispositif côté émission, d'un moteur ayant un courant initial plus faible parmi les moteurs correspondant aux deux bras de serrage E × R fois, et pour amener un bras de serrage correspondant au moteur ayant le courant initial plus faible à pousser le dispositif côté réception pour qu'il se déplace dans la direction opposée à la première direction E × R fois jusqu'à la première position ; le courant initial du moteur comprend un courant du moteur acquis dans un cas où la première condition est satisfaite lorsque le dispositif côté réception est déplacé ; le bras de serrage correspondant au moteur ayant le courant initial plus faible est le deuxième bras de serrage (203b) ; et le bras de serrage correspondant au moteur ayant le courant initial plus important est le premier bras de serrage (203a).

7. Procédé selon l'une quelconque des revendications 1 à 6, dans lequel avant le déplacement de la bobine côté émission (101) dans une deuxième direction, le procédé comprend en outre :
la détermination, dans un cas où le premier paramètre mesuré diminue continuellement M fois lorsque le dispositif côté émission déplace la bobine côté émission (101) dans la direction opposée à la deuxième direction, du fait que le dispositif côté émission déplace la bobine côté émission (101) dans la deuxième direction.

8. Procédé selon la revendication 7, dans lequel le dispositif côté émission comprend en outre un moteur correspondant à la bobine côté émission (101), et la bobine côté émission (101) est déplacée une fois chaque fois que le moteur correspondant à la bobine côté émission (101) tourne ; la deuxième fréquence signifie que le premier paramètre est déterminé une fois toutes les deuxièmes durées, et la deuxième durée est une durée pendant laquelle le dispositif côté émission déplace la bobine côté émission (101) G fois ; et la commande, par le dispositif côté émission, de la bobine côté émission (101) pour qu'elle se déplace dans une direction opposée à la deuxième direction jusqu'à la deuxième position comprend :
la rotation, par le dispositif côté émission, du moteur correspondant à la bobine côté émission (101) dans une direction opposée G × M fois, et la commande de la bobine côté émission (101) pour qu'elle se déplace dans la direction opposée à la deuxième direction jusqu'à la deuxième position.

9. Procédé selon l'une quelconque des revendications 1 à 8, dans lequel le premier paramètre est un facteur de qualité Q, et est utilisé pour mesurer le rendement de charge du dispositif côté émission, et plus le rendement de charge est élevé, plus le premier paramètre est grand.

10. Dispositif côté émission, comprenant : deux bras de serrage et une bobine côté émission (101), dans lequel
les deux bras de serrage sont déplaçables de manière télescopique dans une première direction ;
dans un cas où une première condition est satisfaite lorsque le dispositif côté émission déplace le dispositif côté réception dans la première direction au moyen des deux bras de serrage, le dispositif côté émission est configuré pour arrêter de déplacer le dispositif côté réception dans la première direction, et le dispositif côté réception est déplacé dans une direction opposée à la première direction jusqu'à la première position ;
la première condition comprend : lorsque le dispositif côté émission déplace le dispositif côté réception, un premier paramètre mesuré augmente continuellement lorsque le dispositif côté réception est déplacé dans la première direction jusqu'à la première position, et diminue continuellement R fois lorsque le dispositif côté réception continue d'être déplacé dans la première direction après avoir dépassé la première position ; dans lequel R est un nombre entier supérieur ou égal à 1 ;
la bobine côté émission est déplaçable dans une deuxième direction perpendiculaire à la première direction ;
dans un cas où une deuxième condition est satisfaite lorsque le dispositif côté émission déplace la bobine côté émission (101) dans la deuxième direction, le dispositif côté émission est configuré pour arrêter de déplacer la bobine côté émission (101) dans la deuxième direction, et la bobine côté émission (101) est déplacée dans une direction opposée à la deuxième direction jusqu'à la deuxième position ;
la deuxième condition comprend : lorsque le dispositif côté émission déplace la bobine côté émission (101), un premier paramètre mesuré augmente continuellement lorsque la bobine côté émission (101) est déplacée dans la deuxième direction jusqu'à la deuxième position, et diminue continuellement M fois lorsque la bobine côté émission (101) continue d'être déplacée dans la deuxième direction après avoir dépassé la deuxième position ; dans lequel M est un nombre entier supérieur ou égal à 1 ; dans lequel le dispositif côté émission est configuré, lorsque le système de charge sans fil fonctionne, pour déplacer le dispositif côté réception dans la première direction et déterminer le premier paramètre à une première fréquence lorsque le dispositif côté réception est déplacé, et pour déplacer le dispositif côté réception jusqu'à la première position, dans lequel la première position est une position du dispositif côté réception dans un cas d'un premier paramètre maximal lorsque le dispositif côté réception est déplacé ; et pour déplacer la bobine côté émission (101) dans la deuxième direction et déterminer le premier paramètre à une deuxième fréquence lorsque la bobine côté émission (101) est déplacée, et pour déplacer la bobine côté émission (101) jusqu'à la deuxième position, dans lequel la deuxième position est une position de la bobine côté émission (101) dans un cas du premier paramètre maximal lorsque la bobine côté émission (101) est déplacée ;
dans lequel les deux bras de serrage comprennent un premier bras de serrage (203a) et un deuxième bras de serrage (203b) ; la première fréquence signifie que le dispositif côté émission détermine le premier paramètre une fois toutes les premières durées, et la première durée est une durée pendant laquelle le dispositif côté émission déplace le premier bras de serrage et le deuxième bras de serrage E fois ; le déplacement du dispositif côté réception dans la première direction comprend le fait de pousser, par le dispositif côté émission au moyen du premier bras de serrage (203a), le dispositif côté réception pour le déplacer dans la première direction ; et le déplacement du dispositif côté réception dans la direction opposée à la première direction jusqu'à la première position comprend, dans un cas où la première condition est satisfaite, le fait d'amener, par le dispositif côté émission, les deux bras de serrage à serrer le dispositif côté réception, et de pousser, par le dispositif côté émission sur la base du deuxième bras de serrage (203b), le dispositif côté réception pour le déplacer dans la direction opposée à la première direction E × R fois jusqu'à la première position ;
dans lequel le dispositif côté émission comprend en outre un premier moteur correspondant au premier bras de serrage (203a) et un deuxième moteur correspondant au deuxième bras de serrage (203b), le premier bras de serrage (203a) se déplace une fois chaque fois que le premier moteur tourne, et le deuxième bras de serrage (203b) se déplace une fois chaque fois que le deuxième moteur tourne ; et dans un cas où la première condition est satisfaite lorsque le dispositif côté émission déplace le dispositif côté réception sur la base du premier bras de serrage (203a), le dispositif côté émission est configuré pour déterminer, dans un cas où les moteurs correspondant aux deux bras de serrage calent, que les deux bras de serrage serrent le dispositif côté réception ; et pour commander, dans un cas où les moteurs correspondant aux deux bras de serrage ne calent pas, un moteur ayant un courant plus important parmi les moteurs correspondant aux deux bras de serrage pour qu'il s'arrête de tourner, et un moteur ayant un courant plus faible pour qu'il continue de tourner, pour amener le bras de serrage correspondant au moteur ayant le courant plus faible à entrer en contact avec le dispositif côté réception, et amener les deux bras de serrage à serrer le dispositif côté réception.

11. Support de stockage informatique, stockant un programme informatique, dans lequel le programme informatique comprend des instructions exécutables, et lorsqu'elles sont exécutées par un processeur, les instructions exécutables amènent le processeur à réaliser le procédé selon l'une quelconque des revendications 1 à 9.
